(19) Europäisches Patentamt
European Patent Office
Office européen des brevets

(11) Publication number: **0 137 634**
**B1**

(12) # EUROPEAN PATENT SPECIFICATION

(45) Date of publication of patent specification: **22.02.89**

(21) Application number: **84305470.1**

(22) Date of filing: **10.08.84**

(51) Int. Cl.[4]: **C 08 F 283/10**, C 08 G 18/68, C 08 L 63/00

(54) **Curable epoxy compositions and cured resins obtained therefrom.**

(30) Priority: **11.08.83 US 522419**
**11.08.83 US 522420**

(43) Date of publication of application:
**17.04.85 Bulletin 85/16**

(45) Publication of the grant of the patent:
**22.02.89 Bulletin 89/08**

(84) Designated Contracting States:
**DE FR GB IT NL**

(56) References cited:
**EP-A-0 078 527**
**WO-A-82/00148**
**WO-A-85/00610**

(73) Proprietor: **MINNESOTA MINING AND MANUFACTURING COMPANY**
**3M Center, P.O. Box 33427**
**St. Paul, Minnesota 55133-3427 (US)**

(72) Inventor: **Pocius, Alphonsus V. c/o Minnesota Mining and Manufacturing Company 2501 Hudson Road P.O. Box 33427 St. Paul Minnesota 55133 (US)**
Inventor: **Schultz, William J. c/o Minnesota Mining and Manufacturing Company 2501 Hudson Road P.O. Box 33427 St. Paul Minnesota 55133 (US)**
Inventor: **Adam, Randall E. c/o Minnesota Mining and Manufacturing Company 2501 Hudson Road P.O. Box 33427 St. Paul Minnesota 55133 (US)**

(74) Representative: **Baillie, Iain Cameron et al**
**c/o Ladas & Parry Isartorplatz 5**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 137 634 B1**

## Description

Field of the Invention

This invention relates to a curable epoxy composition containing dispersed elastomeric particles, optionally having a polyoxyalkylenediamine compound as curing agent, the composition being storage-stable against separation of phases. In another aspect, it relates to the cured epoxy resin derived therefrom. In a further aspect, methods for providing the elastomeric particle-containing curable epoxy composition which may be a one- or two-part composition and cured resin are disclosed. The cured epoxy resin is useful, for example, as an adhesive, or a coating or molding compound having reduced susceptibility to mechanical and thermal shock.

Background Art

Epoxy resins, i.e., organic compounds having one or more terminal or pendent oxirane groups,

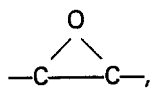

have been widely used for many years in compositions for making molded, cast, and potted products, and for coatings and adhesives because of the relative ease with which they can be converted to cured solid products that are strong and resistant to many chemical environments. Many cured epoxy resins having a high glass transition temperature are known to be brittle and tend to be susceptible to mechanical and thermal shock. To overcome this deficiency, plasticizers and flexibilizers have been introduced into the epoxy composition. The above-described techniques for overcoming the suspectibility of the cured epoxy resins to mechanical and thermal shock have not been entirely satisfactory. The dissolved polymers cure to form a homogeneous copolymer with the epoxy resin and drastically effect desirable epoxy properties such as resistance to heat distortion, glass transition temperature and modulus of elasticity.

The brittle characteristics of epoxy resins has also been modified by the incorporation of an immisicible rubbery phase into the epoxy resin. U.S. Patent Nos. 3,833,683 3,856,883, and 3,864,426 teach the incorporation of a graded rubber or core shell rubber particle into an epoxy resin followed by curing. A glassy acrylate forms a protective shell around the rubbery core. The shell allows the drying or coagulation of these particles without coalescence. The resulting particles are then mechanically dispersed in epoxy resins. The shortcoming of this method is the unstable nature of the dispersed colloid in the resin. The dispersions are in a quasi-stable state where the coagulation and precipitation of the particle is retarded only by the high viscosity of the medium. An additional disadvantage is the relatively large mass of glassy shell material that is incorporated into the colloidal particle. This portion has little effect on the brittle characteristic of the epoxy resin but tends to build viscosities to unacceptable levels. Epoxy compositions modified with core-shell particles frequently provide only moderate improvements in the brittle characteristics of epoxy resins.

An alternative method of improving the mechanical and thermal shock characteristics of epoxy resins can be achieved by dissolving reactive elastomers in the epoxy resin which phase-separate during curing. The technique is exemplified by U.S. Patent Nos. 4,107,116 and 3,894,112. In this technique the structure and form of the dispersed rubber phase in the cured article are controlled by the cure rate, type of curative, and cure temperature. The technique may work well for some cure systems but can be ineffective for others. Another disadvantage is that there is generally some plasticization of the epoxy by the incompletely phase-separated elastomer thus resulting in reduction in the heat deformation temperature.

Room temperature-curing epoxy resin compositions that cure to adhesive bonds having some peel strength at room and low temperatures (−50°C or lower) and some retention of shear strength at room temperature are described by N. C. Paul, et al., "Polymer", *18* (9), 948 (1977).

Epoxy resin compositions, containing a reactive elastomer precursor, that yield adhesive bonds having a −55°C T-peel strength of up to 130 N/25 mm (Newtons per 25 mm of width) (30 piw) are described in U.S. Patent No. 3,894,112. These bonds, however, require that the composition be cured by heating at 250°C for 60 minutes in contrast to the room temperature curing of Applicant's composition.

Poly(oxyhydrocarbolene)diamines (i.e. glycol diamines) are known in the art and are used as a component of polyamides and polyurea/urethanes. U.S. Patent No. 3,316,185 and British Patent No. 904,403 disclose glycol diamines as flexibilizers in epoxy resins to provide desirable light color and no undesirable odor. However, epoxy resins cured by poly(oxyhydrocarbolene)diamines do not display high peel strength at room and low temperatures (down to −55°C) without loss of high shear strength at room and elevated temperatures.

Summary of the Invention

Briefly, the present invention provides an epoxy resin composition comprising a curable epoxide group-containing compound, and colloidally-dispersed therein, *in situ* polymerized elastomeric particles insoluble in the epoxide group-containing compound, the particles being stabilized against separation of phases by a stabilizing compound attached thereto. Optionally, the epoxy resin composition contains as

curing agent a poly(oxyhydrocarbolene)diamine compound and optionally, and preferably, it also contains a cure accelerator.

The epoxy resin composition of the present invention is useful for providing substrates with a protective coating. In a preferred embodiment, wherein a poly(oxyhydrocarbolene)diamine is used as curing agents, the compositon is useful for providing structural adhesives that cure to provide adhesive bonds having high lap shear strength at room and elevated temperatures but also high peel strength at temperatures down to at least −50°C, characteristics not found in commercial adhesives which generally have high lap shear strength at room and elevated temperatures but very low, if any, peel strength at low temperatures.

The method of forming the epoxy resin composition of the invention is shown schematically in the flow chart below.

FLOW CHART

Elastomer forming monomers
(X)
+
Uncured epoxide group-containing compounds (Z)
+
Class I or Class II Stabilizer PQ

↓ (1)

colloidal dispersion of stabilizer-attached elastomeric particles in uncured epoxide compound

↓ (2) addition of poly(oxyhydrocarbolene)diamine curing agent and effecting cure at temperatures of 20-100°C

stabilizer-attached elastomeric particles locked into cured epoxy resin

Class I Stabilizer PQ

P = a functional group reactive with (X)

Q = polymeric segment soluble in (Z)

Class II Stabilizer PQ

P = polymeric segment soluble in (X)

Q = polymeric segment soluble in (Z)

The invention is based on the discovery that compositions of elastomeric particles dispersed in epoxide group-containing compounds containing resins that cure to resins having reduced susceptibility to mechanical and thermal shock are stabilized against separation of phases by the use of a stabilizer having a segment soluble in the epoxy resin and a portion either soluble in the elastomeric particle or reactive into the elastomeric particle. Preferably, the insoluble, colloidally-dispersed, elastomeric particle in the composition of the invention comprises an elastomeric particle selected from particulate polymers of ethylenically-unsaturated monomers and polyurethanes that are insoluble in the curable epoxide compound and have a glass transition temperature of 25°C or less. Most preferably, the colloidally-dispersed elastomeric particle comprises a copolymer of ethylenically-unsaturated monomers of which 75 to 98 percent by weight are selected from one or more ethylenically-unsaturated monomers whose polymer or copolymer is insoluble in the epoxide group-containing compound and 25 to 2 percent by weight of a stabilizer that is a copolymerizable ethylenically-unsaturated group-substituted polymer that has a molecular weight of at least 1000 and is soluble in the epoxide group-containing compound.

As used in this application:

"stabilizer-attached" means one end of the stabilizer compound has become attached, by means of absorptive, ionic, or covalent bonding, to the elastomeric polymer as it formed from the monomer composition, resulting in the elastomeric polymer forming a colloidal dispersion in the uncured epoxide compound and/or the cured epoxy resin;

"epoxide group-containing compound" means fluid organic compounds containing an oxirane group, i.e.,

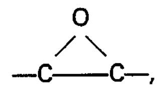

that can be cured by use of a curing agent or a catalyst to a "cured epoxy resin". In the trade "epoxy resin" is a term that has been used sometimes to means the uncured oxirane group-containing compounds and sometimes the cured oxirane group-containing products. Herein, the term epoxide group-containing compounds means an organic compound containing one or more epoxide or oxirane groups and includes the uncured fluid epoxy resins of the trade;

"steric or entropic stabilization" means a solventless composition of colloidally-dispersed particles in which there is a lack of coalescence, i.e. the stabilizer-attached elastomeric particles have greater attraction for the epoxy resin that for other stabilizer-attached elastomeric particles;

"colloidally-dispersed elastomeric particle" means particles of less than 10 micrometer, preferably 0.05 to 1.0 micrometer, of organic polymer, having a glass transition temperature, $T_g$, of less than 25°C which are distributed uniformly in a dispersion medium, namely, in an epoxide group-containing compound;

"monomer composition" means a composition of a mixture of components at least one of which is polymerizable or crosslinkable to an elastomer having a $T_g$ below 25°C;

"abstractable or transferable proton" means a hydrogen that is removable from a first polymer, which hydrogen then terminates a growing second polymer chain, leaving a reactive site (e.g., a free radical site) on the first polymer where further polymerization can take place to form a graft (see subclass Ic Stabilizer);

"lag shear strength" and "shear strength" mean strengths of adhesive bonds that are tested in shear. This test is described in detail in ASTM D 1002—72. "Shear strength" is directly related to modulus of elasticity and stiffness;

"T-peel strength" and "peel strength" mean the strength of an adhesive bond tested in a peel mode. "T-peel strength", described in ASTM D 1876—72, is related to fracture resistance and is related to resistance to mechanical and thermal shock; and

"poly(oxyhydrocarbolene)diamine" means a compound having the formula:

$$H_2N{-}RO{-}(R^1O)_n{-}R{-}NH_2 \qquad I$$

wherein

R is a linear or branched chain alkylene group having 2 to 4 carbon atoms,

$R^1$ is an hydrocarbolene group having 2 to 8 carbon atoms selected from straight and branched chain alkylene groups having 2 to 4 carbon atoms, cycloalkylene groups having 4 to 8 carbon atoms, and arene groups having 6 to 8 carbon atoms, and

n is a number having a value of 1 to 10 such that the number average molecular weight of the curative agent is from 175 to 750, preferably 175 to 500.

Detailed Description of the Invention

The present invention provides a solventless, fluid epoxy resin composition, that can be disposed in a one- or two-part package, that is storage-stable against separation of phases for at least one year, and preferably for two years, is suitable for the preparation of cured epoxy resin having reduced susceptibility to mechanical and thermal shock, and is comprised of

a. 1.0 part of curable epoxide group-containing compound, and

b. 0.05 to 1.0 part of colloidally-dispersed elastomeric particles that are insoluble in the epoxide compound, comprising,

1) 75 to 98 percent by weight of an elastomeric polymer of one or more monomers (X) *in situ* polymerized in the curable epoxide group-containing compound to a polymer which is insoluble in the epoxide compound, and

2) 25 to 2 percent by weight of a stabilizer having the formula PQ, in which Q is a polymeric segment that has a molecular weight of at least 1000 and is soluble in the epoxide group-containing compound, and P is

(a) a functional group covalently attached to Q and also becomes attached to the elastomeric particle during particle growth by formation of a covalent or ionic bond with the elastomeric particle, or

(b) a polymeric segment that has a molecular weight of at least 1000 and that becomes absorbed into the elastomeric particle because it is soluble in the elastomeric polymer of the monomer composition but insoluble in the epoxide group-containing compound.

In another aspect, the invention provides a process for the preparation of a solventless, fluid, epoxide compound-containing composition comprising the steps of:

a. providing a curable epoxide group-containing compound,

b. dissolving in the epoxide compound, in either order, from 0.05 to 1 part per part of epoxide compound of a composition comprising

1) 75 to 98 percent by weight of polymerizable monomer composition that is polymerizable to an elastomeric polymer insoluble in the epoxide compound and

2) 25 to 2 percent by weight of a stabilizer PQ as defined above, and

c. subjecting the solution of the monomer composition in the epoxide compound to conditions which result in polymerization of the monomer composition and attachment of the stabilizer to the growing elastomer particle, without the monomer or stabilizer polymerizing or reacting with the epoxide group-containing compound.

In a preferred embodiment, the epoxy resin composition can provide a cured epoxy resin adhesive composition having high peel strength at temperatures below −50°C, preferably as low as −55°C, in which case the epoxy resin composition further comprises

a chemically effective amount of an epoxide curing agent comprising one or more poly(oxyhydrocarbolene)diamines having the general formula:

$$H_2N{-}RO{-}(R^1O)_n{-}R{-}NH_2 \qquad I$$

wherein

R is a linear or branched chain alkylene group having 2 to 4 carbon atoms,

$R^1$ is an hydrocarbolene group having 2 to 8 carbon atoms selected from straight and branched chain alkylene groups having 2 to 4 carbon atoms, cycloalkylene groups having 4 to 8 carbon atoms, and arene groups having 6 to 8 carbon atoms, and

n is a number having a value of 1 to 10 such that the number average molecular weight of the curative agent is from 175 to 750;

optionally, a curing accelerator, with the provisos (a) that when $R^1$ is a branched chain alkylene the value of n is at least 5, and (b) that the ratio of curable composition to curing agent is such that there is present in the adhesive composition 0.75 to 1.1 equivalents of —NH group per equivalent of epoxide group.

More preferably, the epoxide curing agent is selected from poly(oxyhydrocarbolene)diamines within the scope of Formula I having the formulae:

$$H_2N{-}CH_2CH_2CH_2O{-}W{-}CH_2CH_2CH_2{-}NH_2 \qquad II$$

wherein W is a divalent linking group selected from

$-(CH_2CH_2O)_a-$, 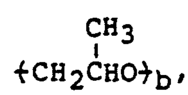, 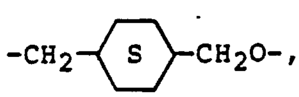, and

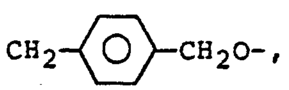,

in which a is a number having a value from 1 to 5, and b is a number having a value from 4 to 10, and

$$H_2N{-}CH_2CH_2O(CH_2CH_2O)_cCH_2CH_2{-}NH_2 \qquad III$$

wherein c is a number having a value from 4 to 10.

Most preferably, the poly(oxyhydrocarbolene)diamine epoxide curing agent of use in the composition of the invention has the general formula

$$H_2N{-}CH_2CH_2CH_2{-}O(CH_2CH_2O)_aCH_2CH_2CH_2{-}NH_2$$

wherein a is a number having a value from 1 to 5.

Preferably, the epoxide group-containing composition of the invention is a two-part adhesive composition which is curable at room temperature, e.g., 20 to 25°C, to provide adhesive bonds when tested

by modified ASTM Designation No. D1876—72 and D1002—72 as described below for FPL etched 2024 T—3 bare aluminum panels having a T-peel strength at −55°C of at least 40 N/25 mm (10 piw), preferably at least 70 N/ 25 mm (16 piw), and most preferably at least 100 N/ 25 mm (25 piw); a T-peel strength at 24°C of at least 130 N/25 mm (30 piw), and preferably at least 200 N/ 25 mm (45 piw); a lap shear at 24°C of at least 30 MPa (4350 psi); and a lap shear at 82°C of at least 2 MPA (300 psi).

When cure of the epoxide group-containing compound is effected with a poly(oxyhydrocarbolene)diamine having a weight average molecular weight of less than 175 the cured resin becomes too highly crosslinked causing a drop in peel strength. Also, when the weight average molecular weight of the poly(oxyhydrocarbolene)diamine is above about 500, the shear strength of adhesive bonds drops.

The process for providing the cured epoxy resin adhesive composition of the preferred embodiment of the present invention further comprises the steps of:

1) adding to the epoxide group-containing composition as described above an epoxide curing agent having the formula

$$H_2N—RO\left(R^1O\right)_{\overline{n}}RNH_2 \qquad I$$

wherein

R, $R^1$, and n are as defined above, and

2) maintaining the composition at a temperature of 20 to 100°C, for a length of time sufficient to effect curing.

The invention provides a process for producing stable colloidal dispersions of polymer particles, generally rubbery particles, in epoxide group-containing compounds using stabilizers therefor. In the process, a monomer, as defined below, that is soluble or dispersible in an epoxide compound, but whose polymer is insoluble in the epoxide compound, is polymerized in the presence of an entropic stabilizing compound that attaches itself to the surface of the growing colloidal particle, that results when the momomer polymerizes, and prevents flocculation, agglutination and precipitation of the particle. The stabilizing compound can be a compound having one part that is soluble in the epoxide group-containing compound and another part that is reactive with or copolymerizable with the monomer, forming a covalent or ionic bond for attachment to the growing colloidal particle. Alternatively, the stabilizing compound can be a compound having one part that is soluble in the epoxide compound and another part that is soluble in the growing colloidal particle and thus becomes attached by absorptive forces to the colloidal particle. Thus, the stabilizer disperses the colloidal particles into the epoxide group-containing compound preventing the colloidal particles from coalescing. The epoxide group-containing compound with steric or entropic stabilized dispersed colloidal particles therein does not phase-separate for at least one year, and preferably for up to two years.

Curable epoxide group-containing compounds (Z) which can be used in the composition of the invention are compounds that possess an oxirane group and have a glass transition temperature, Tg, below about 50°C, preferably below 30°C. Included are monomeric and polymeric type compounds that can be branched or straight chain aliphatic, cycloaliphatic, aromatic, or heterocyclic (having O and/or N hetero atoms) and will typically have an epoxy equivalency of from 1 to 6, preferably 1 to 3. Particularly useful are the aliphatic, cycloaliphatic, and glycidyl ether type 1,2-epoxides such as propylene oxide, styrene oxide, vinylcyclohexene dioxide, glycidol, butadiene oxide, glycidyl propionate, diglycidyl ether or bisphenol A, 3,4-epoxycyclohexylmethyl 3,4-epoxycyclohexanecarboxylate, 3,4-epoxy-6-methylcyclohexylmethyl 3,4-epoxy-6-methylcyclohexanecrboxylate, bis(3,4-epoxy-6-methylcyclohexylmethyl) adipate, dipentene oxide, 1,4-butanediol diglycidyl ether, polyglycidyl ether of phenylformaldehyde resole or novolak resin, resorcinol diglycidyl ether, and epoxy silicones, e.g., poly(dimethylsiloxanes) having cycloaliphatic epoxide or glycidyl ether groups. An example of a heterocyclic epoxide group-containing compound is 1,3-bis(2,3-epoxypropyl-5,5-dimethyl-2,4-imidazolinedione). A wide variety of commercial epoxy resins is available and listed in "Handbook of Epoxy Resins" by Lee and Neville, McGraw-Hill Book Company, New York (1967) and in "Epoxy Resin Technology" by P. F. Bruins, John Wiley and Sons, New York (1968).

There is a host of commercially available cationically-sensitive epoxide group-containing compounds which can be used in this invention. In particular, cyclic ethers which are readily available include diglycidyl ether of bisphenol A (e.g., Epon™828, Shell Chemical Co., and DER™331 Dow Chemical Co.), vinylcyclohexene dioxide (e.g., ERL™—4206, Union Carbide Corp.), 3,4-epoxycyclohexylmethyl-3,4-epoxycyclohexanecarboxylate (e.g., ERL™—4221), 3,4-epoxy-6-methylcyclohexylmethyl 3,4-epoxy-6-methylcyclohexanecarboxylate (e.g., ERL™—4201), bis(3,4-epoxy-6-methylcyclohexylmethyl)adipate (e.g., ERL™—4289), aliphatic epoxy modified with polypropylene glycol (e.g., ERL™—4050 and ERL™—4052), dipentene dioxide (e.g., ERL™—4269), (e.g. Oxiron™—2001, FMC Corp.), silicone epoxy (e.g., Syl-Kem™90, Dow Chemical Co.), 1,4-butanediol diglycidyl ether (e.g., Araldite™RD—2, Ciba-Geigy), polyglycidyl ether of phenolformaldehyde novolak (e.g., DEN™—431, Dow Chemical Co., Epi-Rez™ 521 and DEN™—438), resorcinol diglycidyl ether (e.g., Kopoxite™, Koppers Co.), polyglycol diepoxide (e.g., DER™ 736), polyacrylate epoxide (e.g., Epocryl™ U—14, Shell Chemical Co.), urethane modified epoxide (e.g. QX3599™, Dow Chemical Co.), polyfunctional flexible epoxides (e.g., "Flexibilizer 151"), and mixtures thereof, as well as mixtures thereof with co-curatives, curing agents or hardeners which also are well known (see Lee and Neville and Bruins, supra). Representative of the co-curatives or hardeners which can be used are acid anhydrides such as nadic methyl anhydride, cyclopentanetetracarboxylic dianhydride, pyromellitic anhydride, cis-1,2-cyclohexanedicarboxylic anhydride, and mixtures thereof.

Monomer compositions (X) of the present invention that are polymerizable or crosslinkable to elastomers which preferably have a Tg below 25°C, include both liquid and solid monomer compounds that are soluble in the epoxide compound (Z) and also liquid compounds that are not soluble in the epoxide compound since these liquid compounds can readily be dispersed as very fine droplets by rapid stirring. Suitable compounds for use in the composition are compounds or mixtures of compounds having a reaction functionality that, when dissolved in an epoxide group-containing compound, can be polymerized to an elastomeric polymer under conditions that do not cause appreciable polymerization or reaction of the epoxide group. Preferably, the monomer composition comprises one or more ethylenically-unsaturated group-containing monomers or one or more diisocyanates and coreactive difunctional compounds such a diols, diamines, and alkanolamines that are curable to elastomeric polymers.

Although any of the ethylenically-unsaturated monomers that are polymerizable by free radicals may be used in the monomer composition, to obtain a suitably elastomeric polymer, the monomers or mixtures of monomers used are selected such that on polymerization a polymer or copolymer is obtained that has a $T_g$ below about 25°C. Preferably the ethylenically-unsaturated monomers have the general formula:

$$H_2C{=}\underset{\displaystyle R}{\underset{|}{C}}{-}R^1$$

in which

R is hydrogen, methyl, or chlorine,

$R^1$ is halogen (fluorine, chlorine, bromine),

$$-OR^2,\ -\underset{R^3}{N}-\overset{O}{\overset{\|}{C}}-R^2,\ -\overset{O}{\overset{\|}{C}}O-R^2,\ -\overset{O}{\overset{\|}{C}}\underset{R^3}{N}-R^2\ \text{or}\ -CN;$$

wherein:

$R^2$ and $R^3$ are independently hydrogen, a straight- or branched-chain alkyl group having 1 to 18 carbon atoms, a 5- or 6-atom carbocyclic group having 5 to 18 carbon atoms, a straight- or branched-chain alkoxylalkyl group having 2 to 18 carbon atoms, or $R^3$ together with $R^2$ and then —N— or

$$-N\overset{O}{\overset{\|}{C}}-$$

to which they are attached forms a 5- or 6-atom ring that can be further substituted by 1 to 4 lower alkyl groups ($C_1$ to $C_4$) or 1 benzo group.

For polymers of these monomers to have a $T_g$ below about 25°C, at least 50 percent of the monomers used generally are monomers in which $R^2$ has 4 carbon atoms or more and the average number of carbon atoms in the $R^2$ group is from 4 to 18. Preferably, the elastomeric polymers are polymers of one or more esters of acrylic or methacrylic acid with alkanols having 1 to 18 carbon atoms and an average of 4 to 18 carbon atoms. There can also be present in the monomer composition from 0.1 to 10 percent by weight of the total monomer composition of a crosslinking monomer. The crosslinking monomer can be any material having at least two polymerizable ethylenic groups. Preferably, the cross-linking monomer is a divinyl cyclic hydrocarbon, e.g., 1,4-divinylbenzene, divinylcyclohexne or a polyester of a polyhydric alcohol and acrylic or methacrylic acid, e.g., 3-oxapentamethylene diacrylate or dimethacrylate, pentamethylene diacrylate or dimethylacrylate, ethylene diacrylate or dimethylacrylate, trimethylol propane triacrylate or trimethacrylate, pentaerthritol tetracrylate or tetramethacrylate.

Suitable diisocyanates and coreactive difunctional compounds for use in the monomer composition includes any of the diisocyanates and coreaction diols, diamines, and alkanolamines that react to give polyurethanes, polyureas, or polyurethaneureas that have a $T_g$ below about 25°C. The compounds and process for preparing elastomeric polyurethanes are well known (see, for example, Kirk-Othmer, "Encyclopedia of Chemical Technology", *Vol. 21*, Interscience Publishers, NY, page 94 et seq., 1970). Examples of preferred diisocyanates are the aromatic diisocyanates such as 2,4-tolylene diisocyanate, 4,4'-methylenebis(phenylene diisocyanate) and 1,5-naphthalane diisocyanate. Other diisocyanates include the preferred aliphatic and alicyclic diisocyanates such as hexamethylene diisocyanate and isophorone diisocyanate.

Examples of diols that can be reacted with the diisocyanates are the polymeric diols and diol extenders that are conventionally employed in the art for the preparation of urethane elastomers. The polymeric diols are polyester diols, poly(oxyalkylene) diols in which the alkylene group has 2 to 4 carbon atoms, polyolefin diols, and polydiene diols having a molecular weight from about 400 to 4000. Such diols are wll-known in the art. Examples of the polyester diols (prepared from dicarboxylic acids having 4 to 18 carbon atoms and polyhydric alcohols having 2 to 18 carbon atoms) are poly(ethylene suberate)diol, poly(hexamethylene adipate)diol, and poly(carrolactone)diol. Examples of polyether diols are poly(oxypropylene)diol and poly)oxybutylene)diol. Other examples of polyester and polyether diols and how they are prepared are disclosed, for example, in U.S. Patent No. 4,169,196, which is incorporated herein by reference.

Preferably, the insoluble colloidally-dispersed elastomeric particles are selected from particulate polymers of ethylenically-unsaturated monomers and polyurethanes (monomer compositions characterized by —NHCOO— groups) that are insoluble in the curable epoxide compound and have a glass transition temperature of 25°C or less. Most preferably, the colloidally-dispersed elastomeric particle comprises a copolymer of ethylenically-unsaturated monomers of which 75 to 98 percent by weight are selected from one or more ethylenically-unsaturated monomers whose polymer or copolymer is insoluble in the epoxide group-containing compound and 25 to 2 percent by weight is a stabilizer which is a copolymerizable ethylenically-unsaturated group-substituted polymer that has a molecular weight of at least 100 and is soluble in the epoxide group-containing compound.

Chain extenders (i.e. comonomers) which can be employed in the polyurethane monomer composition can be any of the diol chain extenders commonly employed in the art such as ethylene glycol and butanediol. Other suitable examples are disclosed, for example, in U.S. Patent No. 4,169,196.

The stabilizer compound required in the composition of the invention is a compound having two functionalities, a first functionality (Q) giving it solubility in the epoxide group-containing compound and a second functionality (P) enabling the stabilizer to become attached to the elastomeric particle. The stabilizer with these functionalities can thus provide steric or entropic stabilization to the elastomeric particle against sedimentation or agglutination.

Suitable stabilizers, having the formula PQ, which is defined above, are compounds that can be classified into two different classes, Class I (subclasses a, b, c and d) and Class II, both classes having in common a polymeric segment, Q, that preferably has a molecular weight of at least 1000 and is soluble in the epoxide group-containing compound, and a group P.

Preferred examples of polymers which provide Q segments are copolymers of one or more methyl and ethyl acrylate and methacrylate with 1 to 5 percent by weight of a copolymerizable monomer having a reactive hydrogen-containing group (e.g., a hydroxyl, carboxyl, thiol, or amino group) or an isocyanate group; polymers of glycidyl ethers of mono- and polynuclear dihydric phenols, particularly the polymers of the glycidyl ether of bisphenol A having the formula

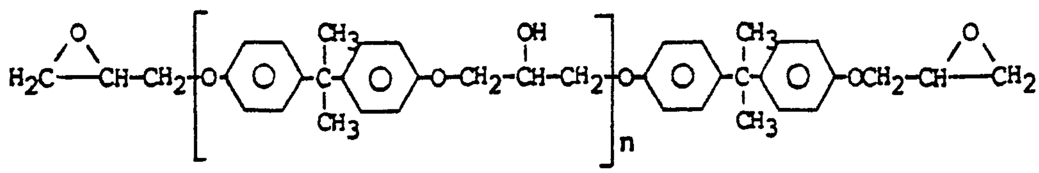

wherein n is a number having a value from 2 to 100; and polymers having an abstractable hydrogen atom, e.g., polyoxyalanylene which has units with the structure

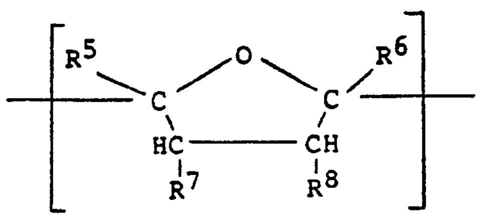

wherein $R^5$, $R^6$, $R^7$ and $R^8$ are individually hydrogen or alkyl groups containing up to 8 carbon atoms each, provided that at least one $R^5$ and $R^6$ is hydrogen.

In the Class I Stabilizer, P is a group copolymerizable with the elastomer monomer composition, reactive with the growing polymer of the monomer composition, able to initiate the polymerization of the monomer composition, or a group forming an ionic bond with one of the monomers in the monomer composition, e.g., a carboxyl or an amino group. In the Class II stabilizers, P is a polymeric segment having a functionality that is soluble in the growing polymer of the monomer composition.

Class I Stabilizers can be any polymer having the necessary molecular weight and solubility characteristics and P is selected from

subclass a) one or more reactive hydrogen-containing groups or isocyanate groups making them copolymerizable, respectively, with the diisocyanate or coreactive difunctional monomer composition. Examples of such stabilizers are the reactive hydrogen group-containing copolymers comprising methyl and ethyl acrylate with 0.1 to 10 mole percent of an hydroxyl-, carboxyl-, thio, amido- or amino-substituted alkyl acrylate or methacrylate, such as poly(98 percent methyl acrylate-co-2 percent 2-hydroxyethyl acrylate). In this copolymer, the segments derived from methyl acrylate provide a molecular weight above 1000 and solubility in the epoxide group-containing compound;

subclass b) one or more ethylenically-unsaturated groups making them copolymerizable with the ethylenically-unsaturated monomer composition. Examples of such stabilizers are the reaction products of the reactive hydrogen group-containing polymers described in a) above with acryloylating compounds such as acryloyl or methacryloyl chloride, acrylic or methacrylic anhydride, ω-isocyanatoalkyl acrylate or methacrylate and 2,3-epoxypropyl acrylate or methacrylate. An example of such a stabilizer is poly(98

percent methyl acrylate-co-2 percent acryloyloxyethylcarbamoyloxyethyl methacrylate);

subclass c) a group having an easily abstractable or transferable proton that leves a polymeric free radical such as, for example, poly(2,5-oxolanylene) whic is disclosed in U.S. Patent No. 4,309,516 and incorporated herein by reference, poly(<50 percent butadiene-co->50 percent styrene), and poly-(oxytetramethylene); and

subclass d) an acid or basic group such as a carboxyl or an amino group. An example of such a stabilizer is a copolymer of methyl acrylate and 1 to 5 weight percent of acrylic acid.

When the elastomer is a polyurethane polymer, P of Stabilizer PQ can be either an isocyanate group or a reactive hydrogen-containing group so as to copolymerize with the polyurethane-forming monomers and thus attach Q to the polyurethane. When the elastomer is a copolymer of ethylenically-unsaturated monomers, P of Stabilizer PQ can be an ethylenically-unsaturated group so as to copolymerize therewith. When the elastomer is a copolymer of ethylenically-unsaturated monomers, P of Stabilizer PQ can be an easily extracted proton which, in the presence of peroxide, leaves a polymeric free radical on which the monomers become grafted. Also, when the elastomer is a copolymer of ethylenically-unsaturated monomers, P of Stabilizer PQ can be a free radical initiator covalently attached to Q which can initiate the polymerization of the monomers and form a graft polymer. When the elastomer is a copolymer of ethylenically-unsaturated monomers, one of which has an acid or basic group (i.e., carboxyl or amino group), P of Stabilizer PQ can be a basic or acid group complementary to the acid or basic groups so as to ionically bond the stabilizer to the elastomer.

Class II stabilizers are segmented polymers having both a polymeric segment Q, that is, as defined above for Class I Stabilizers and a polymeric segment P that has a molecular weight of at least 1000 and is soluble in the growing polymer of the monomer composition. Examples of such segmented polymers are those resulting from the polymerization of 1 part of an acryloxylated active hydrogen group-containing methyl or ethyl polymer (as described under Class Ib Stabilizers) and 0.5 to 1.5 parts of alkyl acrylates in which the alkyl group has 4 carbon atoms or more and an average of 4 to 8 carbon atoms.

Where the elastomeric particle is a polymer of an ethylenically-unsaturated monomer, the curable composition of the invention is prepared by mixing in a suitable reaction vessel the epoxide compound, one or more ethylenically-unsaturated monomers, the stabilizer, and 0.05 to 5.0 percent by weight of a free radical polymerization initiator, based on total weight of ethlenically-unsaturated compounds. The vessel is flushed with inert gas, e.g., nitrogen, and the contents are agitated vigorously. The reaction is then allowed to proceed while applying cooling or heat to maintain a controlled temperature from 25 to 125°C for 2 to 24 hours. Preferably, the temperature is maintained at 50 to 80°C for 10 to 20 hours. Suitable sources of free radicals are the organic peroxides such as a lauroyl peroxide or azobis(isobutyronitrile). Other sources of free radicals, well known in the art for polymerization of ethylenically-unsaturated compounds, can be used. Following the reaction, the composition is cooled to 25°C and is ready for compounding, if desired, immediate use, or storage.

When the elastomeric particle is a polyurethane, the composition of the invention is prepared by mixing in a suitable reaction vessel the epoxide, the stabilizer, the polyols and 0.95 to 1.05 equivalents of one or more diisocyanates, and optionally a catalyst for urethane formation, such as stannous octoate or other catalysts as is known in the art. Vigorous agitation is employed. Generally, as the reactants are added to the epoxide compound, they dissolve, the temperature of the mixture rises, and particulate reaction product begins to form as is made evident by the mixture taking on a milky appearance. The temperature is allowed to climb and with added heat held at 75 to 125°C until analysis indicates disappearance of the isocyanate group. The reaction is complete in less than 60 minutes.

In the preferred embodiment, the colloidal composition preferably contains 10 to 30 percent, more preferably 13 to 25 percent, by weight of colloidally-dispersed elastomer in the total weight of combined elastomer and curable epoxide group-containing compounds. At concentrations of elastomer below 10 percent, cured compositions become increasingly brittle and lose peel strength and above about 30 percent they lose shear strength.

The epoxy composition of the invention may be compounded, as is customary with epoxy compositions, by the addition of pigments such as carbon black, clay, silica, glass beads, glass fibers, coloring agents, antioxidants, plasticizers, flame retardants such as intimony trioxide, fillers extenders. From 0.5 to 100 parts of additive per 100 parts of epoxy composition may be added.

The epoxy composition can be cured by a variety of curing agents as are described, together with the method for calculating the amount to be used, in the book by Lee and Neville, "Epoxy Resins," pages 36 to 140, McGraw-Hill Book Company, New York, 1957. Useful curing agents include amines such as ethylenediamine, diethylenetriamine, aminoethylethanolamine diaminodiphenylsulfone, dicyandiamide, organic acids such as adipic acid, and acid anhydrides such as phthalic anhydride, chlorendic anhydride. Generally, the mixture of epoxy composition and curing agent in stoichiometric amounts (i.e., one active amine hydrogen for each epoxide group) can be cured by heating at 20 to 200°C for 10 minutes to about 10 hours, preferably 100 to 200°C for 0.5 to 1.0 hour depending on the particular epoxide compound, curing agent, and the amount of material being cured.

The epoxy composition can also be cured by catalytic agents that are either thermally-activated or photoactivated.

Examples of the thermally activated catalytic agents include $BF_3$-amine complexes, benzyldi-

methylamine, trimethylamine. Examples of photoactivated catalysts include 4-chlorobenzenediazonium hexafluorophosphate, diphenyliodonium hexafluoroarsenate, and triphenyl hexafluoroarsenate. Other photoactivated catalysts are well known and are taught in U.S. Patent Nos 4,039,521, 4,096,955 and 4,076,536. When a thermally-activated catalyst is employed, from 0.01 to 20 percent by weight, preferably 0.5 to 5 percent by weight, of catalyst based on the epoxy composition is used. Within these catalyst concentrations, curing can be made to proceed using lower temperatures (e.g., down to −10°C) or elevated temperatures (e.g., 30 to 200°C, preferably 50 to 100°C) to either subdue the exotherm of polymerization or to accelerate the polymerization. When a photoactivated catalyst is used, 0.01 to about 10 percent by weight of catalyst, based on the epoxy composition, is used. Curing is effected by exposing the catalyzed composition to any source of radiation-emitting actinic radiation at a wavelength within the visible and ultraviolet spectral regions. Suitable sources of radiation include mercury vapor, xenon, carbon arc, sunlight. Exposures may be from less than about 1 second to 10 minutes or longer depending on the particular epoxide compound, the photoactivatory, the specific source, the distance from the source, and the thickness of the composition to be cured.

In the present invention, preferably poly(oxyhydrocarbolene)diamines are used as the epoxide curing agent in the curable epoxide group-containing compositions of the invention and include compounds having the formulae:

| Compound No. | Structure |
|---|---|
| 1. | $H_2N-C_2H_4O(C_2H_4O)_2C_2H_4-NH_2$ |
| 2. | $H_2N-C_2H_4O(C_2H_4O)_4C_2H_4-NH_2$ |
| 3. | $H_2N-C_3H_6O(C_3H_6O)_5C_3H_6-NH_2$ |
| 4. | $H_2N-C_3H_6O-C_2H_4O-C_3H_6-NH_2$ |
| 5. | $H_2N-C_3H_6O(C_2H_4O)_2C_3H_6-NH_2$ |
| 6. | $H_2N-C_3H_6O(C_2H_4)_3C_3H_6-NH_2$ |
| 7. | $H_2N-C_3H_6O(C_2H_4O)_5C_3H_6-NH_2$ |
| 8. | $H_2N-C_3H_6O(C_2H_4O)_{10}C_3H_6-NH_2$ |
| 9. | $H_2N-C_3H_6O-C_4H_8O-C_3H_6-NH_2$ |
| 10. | $H_2N-C_3H_6O(C_3H_6O)_{10}C_3H_6$ |
| 11. | 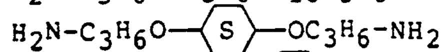 |
| 12. | 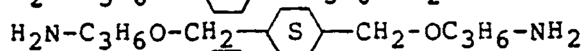 |
| 13. | 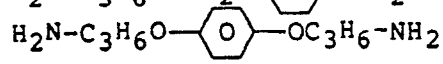 |
| 14. | $H_2N-C_4H_8O(C_2H_4O)_3C_4H_8-NH_2$ |

In the above formulae, $—C_3H_6—$ and $—C_4H_8—$ are meant to include both the linear and various branched isomers of these structures.

The curing agent is present in 0.75 to 1.1 equivalents of —NH per epoxy equivalent weight and preferably in essentially stoichiometric amounts. Curing takes place at room temperature in about 6 hours to 7 days or longer.

It may be desirable to add a cocurative, which can be any curing agent known in the art, which may serve to improve certain properties, i.e., high temperature shear strength, of the cured material. Examples of cocuratives include 1,3-propane diamine and m-xylylene diamine. The cocurative can be present in the range of 0.05 to 20 mole percent of the curing agent.

Within the scope of the diamines of the present invention are the poly(oxyalkylene)diamines that are called "glycol diamines" in *Chemical Abstracts*. The fourth compound in the above list is given the name 3,3'-[oxybis(2,1-enthanediyloxy)]bispropanamine.

Poly(oxyhydrocarbolene)diamines are prepared by several processes, a preferred process being the addition of a diol, e.g., a hydrocarbolenediol such as diethylene glycol (i.e., 2,2'-oxydiethanol), to acrylonitrile followed by reduction of the bisnitrile obtained to di(oxyethylene)dipropionamine as is taught in British Patent No. 988,632, which patent is incorporated herein by reference.

More particularly, the liquid glycol diamines which are used as the curing agents for polyepoxide compositions can be conveniently prepared by cyanoalkylating a glycol having the general formula

$$HO{-}(R^1O{)_n}{-}H$$

wherein $R^1$ and n are as previously defined, by reacting the glycol with at least two moles of acrylonitrile

per mole of the glycol at a temperature of from 20°C to 60°C and in the presence of an alkali metal alkoxide such as sodium methoxide to form the corresponding cyanoalkylated compound. The cyanoalkylated compound is then hydrogenated at a temperature in the range of from 95°C to 100°C in the presence of nickel as a catalyst and at pressures on the order of 10.3 MPa (1500 p.s.i.g.). Suitable glycols having the formaula previously given which can be cyanoalkylated with acrylonitrile include, among others, ethylene glycol, diethylene glycol, 1,2-propylene glycol, 1,3-propylene glycol and 1,4-butylene glycol. Illustrative of specific liquid glycol diamines suitable for purposes of this invention are di-(3-aminopropyl) ether of ethylene glycol, di-(3-aminopropyl) ether of 1,2-propylene glycol, di(3-aminopropyl) ether of diethylene glycol, di-(3-aminopropyl) ether of triethylene glycol and di-(3-aminopropyl) ether of dipropylene glycol.

Preferably, the epoxide group-containing composition of the invention contains a curing accelerator in an amount up to about 15.0 percent, preferably 5.0 to 12.0 percent by weight of the poly(oxyhydrocarbolene)diamine. The curing accelerator is an agent well known in the epoxy adhesive field for reducing the time required to bring about curing of the epoxy adhesive composition. Such agents are recognized as any hydrogen donating compound sufficiently acidic to donate hydrogen but not acidic enough to form a salt with the amino group of the curative amine. A further discussion of curing accelerators for epoxy resins is given by C. A. May and Y. Tanaka, "Epoxy Resins, Chemistry and Technology", Marcel Dekker, Inc., New York, 1973, page 146 *et seq*. Examples of curing accelerators include: water; alcohols, e.g., methanol and is o-propanol; phenols, e.g., phenol and 2,4,6-tris(dimethylaminomethyl)phenol (DMP—30, Rohm and Haas Co.); ureas, e.g., urea, N-methyl urea; imidazoles, e.g., imidazole, 2-aminoimidazole, and 2-ethyl-4-methylimidazole; 5-amino-1,3,4-thiadiazole-2-thiol; and 6-amino-2-mercaptobenzothiazole.

Various other materials can be added to the composition to alter or even improve the characteristics of the cured adhesive including solvents, viscosity modifiers, fillers, pigments, dyes, fibers, glass or plastic microbeads or bubbles, plasticizers. Depending on the desired function of the additive, from traces to 100 percent or more by weight the additive based on the weight of epoxide group-containing compound in the composition may be used.

Generally, the adhesive composition of the invention is packaged for storage prior to use as a kit of two separated parts, Part A and Part B. Part B will contain the curable epoxide group-containing compound and the colloidally dispersed *in situ* polymerized elastomer particles and Part A will contain the epoxide curing agent of one or more poly(oxyhydrocarbolene)diamines and when used, the curing accelerator. The other additives can be incorporated into either Part A or Part B or in both parts. It is often desirable that a portion of the epoxide group-containing compound (e.g., up to about 25 weight percent) be prereacted with the curing agent and included in Part A to increase the viscosity of this part.

The epoxy compositions of the invention can be used for any of the applications for which epoxy resins are normally used. This includes coatings, adhesives, caulking, sealing, molding, potting, and encapsulating compositions. The compositions of the invention can also be used as impregnating compositions for fibers of glass, graphite, boron, ceramic, and Kevlar™ etc., all providing fiber-reinforced composites, depending on the particular epoxide compound and additives employed. The present compositions are particularly well adapted for one-part, cured-in-place, applications.

In the following examples, crack propagation (method of measuring toughness, e.g., double torsional fracture test wherein a sharp crack is introduced into a sample of cured resin and is allowed to propagate until the sample fails as energy is applied when opposite ends of the sample are twisted apart) of cured epoxy composition is measured using an Instron Tensile Tester by the procedure described by D. J. Gerry, Ph.D. Thesis, University of Vermont (1965).

Resistance to heat shock fracture of the cured epoxy composition is assessed by the procedure described by M. Olyphant, "Thermal Shock Test For Casting Resins," Conf. on the Appl. of Elec. Insul. (IEEE/NEMA), Cleveland, 1958. In accordance with this test a 3.17 mm thick steel washer is placed in a 45 mm diameter aluminum dish and 30 g of epoxy composition is poured therein. The dish and its contents are vacuum degassed and the composition cured in an oven at 90°C for one hour and 120°C for 16 hours. The cured composition with embedded steel washer is then removed from the aluminum dish, heated to 130°C for 15 min. in a forced air oven and plunged into dry ice-acetone for about five minutes, removed, and allowed to warm to 20°C and inspected for crack formation. The process of heating and cooling followed by inspection for cracks is repeated for 15 times or until crack formation is noted by visual inspection.

The following examples serve to further describe the invention. Parts are by weight unless otherwise indicated.

Class Ia Stabilizer

Into a dry reaction flask were placed 31.5 g of 2,2-bis[4-(2,3-epoxypropoxy)phenyl]propane (available as DER™—332 from Dow Chemical Co.) that had been thoroughly dried by agitating at 50°C with 1.63 grams phenyl isocyanate followed by vacuum distillation to remove unreacted phenol isocyanate. To the hydroxyl-free epoxide group-containing compound was added 3.3 g of methyl acrylate, 0.2 g of 2-isocyanatoethyl methacrylate, and 0.035 g of azobisisobutyronitrile. The solution was flushed with nitrogen, agitated, and heated to 60°C. These conditions were maintained for 16 hours after which the viscous 10 percent by weight solution of poly(methylacrylate-co-2-isocyanatoethyl methacrylate) in epoxy compound was cooled to 25°C. This modified polymer, poly(methyl acrylate-co-2-isocyanatoethyl methacrylate), a subclass Ia Stabilizer was identified as "Stabilizer D".

Class Ib Stabilizers

Into a dry reaction flask there were placed 95 g of EPON™1009 (a bisepoxy reaction product of bisphenol A and epichlorohydrin having a molecular weight of 8080), 200 g tetrahydrofuran, and 5 g of 2-isocyanatoethyl methacrylate. The mixture was agitated and heated at 80°C for five hours. The resulting solution contained 33.3 percent by weight of modified polymer having an average of 2.7 pendent methacrylic groups per polymer chain, a subclass Ib Stabilizer, identified as "Stabilizer A".

Into a dry reaction flask were placed 79 g methylacrylate, 10 g acrylic acid, 300 g tetrahydrofuran and 0.4 g azobis(isobutyronitrile). The mixture was flushed with dry nitrogen, agitated, and heated to 60°C. These conditions were maintained for 16 hours after which the viscous solution of copolymer obtained was cooled to 35°C and 11 g 2-isocyanato-ethylmethacrylate was added. This mixture was agitated at 35°C for 24 hours. At the end of this time, the isocyanate absorption bond as indicated by infrared spectroscopy had disappeared. The product obtained was a 25 percent solution of a polymer of ethylenically-unsaturated monomers, soluble in the epoxide compound and having pendent 2-methyacryloyloxyethylcarbamoyl groups. This modified polymer, poly[methyl acrylate-co-N-(2-methacryloylethyl)acrylamide], a subclass Ib Stabilizer, was identified as "Stabilizer B".

Class II Stabilizers

Into a dry reaction flask were placed 30 g of the 33.3 percent by weight solution in tetrahydrofuran of Stabilizer A, 10 g hexyl acrylate, 60 g tetrahydrofuran and 0.2 g azobis(isobutyronitrile). The mixture was flushed with dry nitrogen, agitated, and heated to 65°C. These conditions were maintained for 16 hours after which the viscous solution was cooled. There was obtained a 20 percent solution of a segmented polymer having a segment (from Epon™1009) that is soluble in epoxide-compounds and segments (from hexylacrylate) that are insoluble in epoxy compounds. This modified polymer, a polymer of "Stabilizer A" and hexyl acrylate, a Class II Stabilizer was identified as "Stabilizer C".

Objects and advantages of this invention are further illustrated by the following examples, but the particular materials and amounts thereof recited in these examples, as well as other conditions and details, should not be construed to unduly limit this invention.

Example 1

Into a 500 ml reaction vessel equipped for distillation were placed 78 g DER™—332 (diglycidyl ether of bisphenol A having an epoxy equivalent weight of 185 to 191 available from Dow Chemical Co.) and 6.0 g Stabilizer A solution (2.0 g solids). The vessel was evacuated and heated to distill tetrahydrofuran until the pot temperature reached 100°C at a pressure of less than 1.0 torr. The temperature was reduced to 25°C, the vacuum removed and 20 g hexyl acrylate and 0.1 g azobis(isobutyronitrile) were added. The distilling apparatus was replaced by an agitator. The vessel was flushed with nitrogen the vessel contents vigorously agitated and heated to 65°C. These conditions were maintained for 16 hours, after which a moderately viscous milky dispersion (designated SCD—1) was obtained.

The procedure of this EXAMPLE was repeated using, however, four other formulations. The components of the five samples are shown in TABLE I.

TABLE I

| | Sample | | | | |
|---|---|---|---|---|---|
| Materials (in grams) | 1 | 2 | 3 | 4 | 5 |
| ERL—4221 | — | — | — | — | 67 |
| Der-332 | 78 | 78 | 78 | 78 | — |
| Stabilizer A solution [solids] | 6.0[2.0] | — | — | 6.0[2.0] | — |
| Stabilizer B solution [solids] | — | 8.0[2.0] | — | — | 12.0[3.0] |
| Stabilizer C solution [solids] | — | — | 20[4.0] | — | — |
| hexylacrylate | 20 | 20 | 18 | — | 30 |
| 60 butylacrylate/40 isooctylacrylate | — | — | — | 20 | — |
| azobis(isobutyronitrile) | 0.1 | 0.1 | 0.1 | 0.1 | 0.15 |

In each of samples 2—5, a moderately viscous milky dispersion of acrylic elastomeric particles in curable epoxide compounds was obtained.

Example 2

Into a 500 ml reaction vessel were placed 70 g of DER™—332, dried as described for the preparation of Stabilizer D, 15 g of the 10 percent solution of Stabilizer D in DER™—332, 15 g of poly(butadiene)diol having an hydroxyl equivalent weight of 1253 (available as poly(butadiene)diol from Aldrich Chemical Company), and 0.05 g stannous octoate. The vessel and its contents were flushed with nitrogen and heated to 80°C. These conditions were maintained for 5 hours, after which time 1.15 g toluene diisocyanate was added and the conditions maintained for an additional 16 hours. There was obtained a milky dispersion of elastomeric polyurethane particles in DER™—332.

Example 3

The rubbery dispersion prepared in DER™—332 (samples 1, 2, 4, from EXAMPLE 1 and sample 6 of EXAMPLE 2) were cured and compared to an unmodified control. Samples 1, 2, 4, and 6 and the control had the compositions as shown in TABLE II.

TABLE II

| | Samples 1,2,4,6 | Control |
|---|---|---|
| Epoxy dispersion | 125 parts | — |
| Resorcinol | 20 parts | 20 parts |
| 2-ethyl-4-methylimidazole | 3.3 parts | 3.3 parts |
| DER™—332 | — | 100 parts |

The resin samples and control were cured in Teflon™ molds giving specimens appropriate for the various tests. The resins were cured by heating to 60°C, 90°C, and 120°C for 1 hour, 1 hour, and 16 hours, respectively.

The results of the physical properties are tabulated below in TABLE III.

TABLE III

| Sample | Glass transition temperature | Double torsinal fracture energy (ergs/cm$^2$) | Thermal heat shock |
|---|---|---|---|
| 1 | 112°C | $1.15 \times 10^7$ | Greater than 15 cycles |
| 2 | 113°C | $1.09 \times 10^7$ | Greater than 15 cycles |
| 4 | 112°C | $1.10 \times 10^7$ | Greater than 15 cycles |
| 6 | 116°C | $0.95 \times 10^7$ | Greater than 15 cycles |
| Control | 115°C | $0.01 \times 10^7$ | 1 cycle |

The data of TABLE III shows that the toughness and resistance to heat shock fracture of the resin samples within the scope of the invention far surpassed that of the control which contained no rubbery dispersion.

Example 4

This EXAMPLE demonstrates the use of the composition of the invention for the preparation of glass fiber composites. Unidirectional composites (article and control) were prepared using as a matrix resin, for the article, an epoxy resin containing a dispersed elastomer in accordance with the present invention and, for comparison, epoxy resin without the dispersed elastomer. The dispersion of EXAMPLE 1, Sample 1 (77.7 parts by weight) was mixed with EPON™1001 (32.6 parts) as epoxy additive, and with parachloro phenyl-1-dimethyl urea (0.8 parts), and dicyandiamide (6.0 parts) as curing agents. The control matrix resin contained the epoxide group-containing compound, the epoxy additive, and curing agents (identical parts by weight) but no dispersion.

The above mixtures were coated onto unidirectional glass fibers so that the final composition was 70 percent glass and 30 percent epoxy/curative. The composites were cured by heating to 121°C (250°F). The

fracture energy of the two samples was compared by the double torsional fracture energy test fracture. The data is shown in TABLE IV below.

TABLE IV

| Sample | Fracture energy ($ergs/cm^2$) |
|---|---|
| Article (with dispersed elastomer) | $4.12 \times 10^7$ |
| Control (without dispersed elastomer) | $0.2 \times 10^7$ |

The data of TABLE IV show that the energy required to fracture the article coated with a cured composition of the invention was more than 20 times that for the control.

Example 5

This EXAMPLE demonstrated the attachment of the epoxy containing soluble segment Q to the elastomer particle by formation of a free radical on the Q segment of the stabilizer, a subclass Ic Stabilizer. The following ingredients were mixed together in a reaction vessel with stirring:

| | |
|---|---|
| hexyl acrylate | 20.0 g |
| poly(2,5-oxolanylene)* | 2.0 g |
| DER™—332 | 78.0 g |
| tert-butyl hydroperoxide | 0.2 g |

*U.S. Patent No. 4,309,516

The reaction vessel, under a nitrogen atmosphere, was heated to 75°C for 48 hours. This procedure resulted in a fluid milky dispersion of hexyl acrylate particles with poly(2,5-oxolanylene) appended onto the surface of the colloidal particle. The poly(2,5-oxolanylene) became attached because, in the presence of a hydroperoxide, a hydrogen radical was abstracted from the polymer backbone leaving a polymeric free radical. (The polymeric radical can attach to a polyhexyl acrylate chain either by initiating a growing polyhexyl acrylate chain or coupling with a growing polyhexyl acrylate radical).

Example 6

This EXAMPLE demonstrated attachment of the epoxide-containing soluble segment Q to the elastomer particle by having the free radical initiator attached to segment Q. Segment Q was prepared from the following components:

| | |
|---|---|
| methylacrylate | 30.0 g |
| isocyanatoethyl methacrylate | 3.0 g |
| DER™—332 (dried following the procedure for Stabilizer D) | 67.0 g |
| azobis(isobutyronitrile) | 0.3 g |

The ingredients were mixed together in a reaction vessel under a $N_2$ atmosphere and heated to 65°C for 24 hours. A clear viscous solution resulted and was designated solution M. The dispersion was prepared from the following components:

| | |
|---|---|
| solution M | 6.0 g |
| hexyl acrylate | 20.0 g |
| DER™—332 | 74.0 g |
| cumen hydroperoxide | 0.2 g |

The components were mixed together in a reaction vessel under a $N_2$ atmosphere and heated to 75°C for 24 hours. This resulted in a milky dispersion and 75 percent conversion of the hexyl acrylate into elastomer particles. Azobis(isobutyronitrile) (0.1 g) was added and the dispersion was heated for an additional 8 hours. This resulted in the polymerization of the untreated hexyl acrylate. The radical initiator in this EXAMPLE was formed by the reaction of the cumen hydroperoxide with the isocyanate functional Q

segment. The resulting peroxycarbamate cleaved, formed a free radical on the Q segment, initiated the hexyl acrylate polymerization, and thus attached the Q segment to the growing elastomer particle. The stabilizer of this EXAMPLE was a subclass Ic Stabilizer.

Example 7

This EXAMPLE showed that a Q segment with no mechanism of attaching itself to the growing elastomer was ineffective in forming a colloidal dispersion. The following components were mixed together:

| | | | | |
|---|---|---|---|---|
| hexyl acrylate | 20 g | 20 g | 20 g | 20 g |
| poly(methyl acrylate) | 2 g | 4 g | — | — |
| EPON™ 1009 | — | — | 2 g | 4 g |
| DER™—332 | 78 g | 76 g | 78 g | 76 g |
| azobis(isobutyronitrile) | 0.2 g | 0.2 g | 0.2 g | 0.2 g |

The components were mixed together in a reaction vessel with stirring under a $N_2$ atmosphere, and heated to 65°C for 24 hours. All samples resulted in a non-homogeneous mixture of globules of unstabilized poly(hexyl acrylate) in DER™—332.

Example 8

This EXAMPLE demonstrates binding a stabilizer segment Q to the elastomer particle vis an ionic bond. The Q segment containing a carboxylic acid group (P) was prepared from the following components:

| | |
|---|---|
| methyl acrylate (Q precursor) | 7.76 g |
| acrylic acid | 0.24 g |
| ethyl acetate | 24.0 g |
| azobis(isobutyronitrile) | 0.04 g |

The components were mixed together in a reaction vessel under a nitrogen atmosphere and allowed to react for 7 hours at 75°C. A clear viscous solution was produced. This stabilizer solution was used in preparing a colloidal dispersion of stabilizer attached elastomeric particles in an epoxide compound using the following components:

| | |
|---|---|
| hexyl acrylate | 19.5 g |
| 2-(dimethylamino)ethyl methacrylate | 0.5 g |
| stabilizer solution | 8.0 g |
| | (2.0 grams solids) |
| DER™—332 | 78.0 g |
| azobis(isobutyronitrile) | 0.1 g |

These components were mixed in a reaction vessel under vacuum to remove the ethyl acetate from the stabilizer solution. The vessel was then placed under a nitrogen atmosphere and heated to 65°C for 16 hours. This procedure resulted in a fluid, stable, milky dispersion of poly(hexylacrylate-co-2-(dimethylaminoethyl methacrylate elastomeric particles in DER™—332. In this example the stabilizer (a subclass Id Stabilizer) was attached to the elastomer particle via an ionic bond formed between the carboxylic acid on segment Q and the tertiary amine group present in the elastomeric particle.

In the examples below, samples were evaluated by the tests described below. These are exemplary of adhesive performance. Different absolute values will be obtained with other adherends and test methods.

A. T-Peel Test

ASTM Standard Method of Test for PEEL RESISTANCE OF ADHESIVES (T-PEEL TEST) Designation D1876—72 was used following the recommended procedure with the following modifications.

1) Flexible adherends were 2024 T3 bare aluminum sheet 0.63 mm (25 mils) thick instead of the

designated 0.81 mm (32 mils) thick cut to a width of 76 mm (3 in) and a length of 203 mm (8 in).

2) Adherends were given in "FPL etch" (e.g. immersed in a sulfuric acid-chromic acid bath), rinsed with tap water, and dried.

3) Components of the adhesive were weighed, then mixed by hand for two minutes until homogeneous and degassed by application of a vacuum.

4) Laminated panels were prepared by spreading adhesive at a thickness of about 0.81 mm (32 mils) onto one adherent over an area of about 75 mm (3 in) × 175 mm (6 in) leaving an uncoated area of about 50 mm (2 in) × 75 mm (3 in). Spacers of 0.2 mm thickness were then placed along the length of the adherend and the second adherend superposed.

B. Lap Shear Test

ASTM Standard Method of Test for STRENGTH PROPERTIES OF ADHESIVES IN SHEAR BY TENSION LOADING METAL-TO-METAL) Designation D1002—72 was used with the following modifications.

1) Adherends were 2024 T3 bare aluminum sheet 1.60 mm (63 mils) thick × 102 mm (4.0 in) wide × 178 mm (7.0 in) long.

2) Adherends were cleaned as for the T-Peel test.

3) Lap panels were prepared according to recommendations using adhesive mixed as for the T-Peel test and using as spacers glass thread of about 0.1 mm in diameter that was placed in the adhesive. The adherends were held in place by a short strip of tape placed about the sides of the overlap.

C. Procedure

The assembled test panels were stacked on a horizontal surface in the following order: 1) two laminated panels, 2) two 100 mm × 200 mm sheets of metal weighing about 4.5 kg each, 3) two lap panels, and 4) one 100 mm × 200 mm sheet of metal weighing about 4.5 kg. The metal sheets were used to apply pressure to the bonds. Below, above, and between the test panels, strips of cardboard were placed to insure even distribution of pressure on the test panels and release paper was used to prevent the panels from being bonded one to the other by adhesive that might be pressed from each assembly.

Objects and advantages of this invention are further illustrated by the following exaples, but the particular materials and amounts thereof recited in these examples, as well as other conditions and details, should not be construed to unduly limit this invention.

Reference is made to the above-described T-Peel and Lap Shear tests in the following examples and appended claims by the name "ASP" test.

Example 9

To 30 g of dispersion SCD—1 prepared as in EXAMPLE 1 (containing 6 g of colloidally dispersed elastomer) was added 6.86 g diethyleneglycol bispropylamine (Compound 1, hereinafter designated DGBP) and 0.87 g imidazole (IMDZ) as curative accelerator. Test specimens were prepared as described above and stored at 22°C for seven days, after which determinations were made of −55°C and 24°C T-Peel and 24°C and 82°C Lap Shear strengths.

In TABLE V is recorded the T-Peel and Lap Shear data and mean and standard deviations determined from 14 trials, each of which had two or more specimens.

TABLE V

Adhesive Composition of SCD—1 and DGBP

| Test | | |
|---|---|---|
| −55°C T-Peel | 110 ± 44 N/25 mm | (29.3±10 piw) |
| 24°C T-Peel | 210 ± 39 N/25 mm | (47.3±8.8 piw) |
| 24°C Lap Shear | 33 ± 2 MPa | (4850±322 psi) |
| 82°C Lap Shear | 3 ± 1 MPa | ( 421±110 psi) |

The data of TABLE V show that a composition of the invention provides bonds having −55°C T-Peel strength consistently above 70 N/25 mm (Newtons per 25 millimeters of width) with values as high as 150 N/25 mm, 24°C T-Peel strength above 170 N/25 mm with values as high as 250 N/25 mm, 24°C Lap Shear consistently above 31 MPa and as high as 35 MPa, and 82°C Lap Shear above 2MPa.

Examples 10—24

Adhesive compositions were prepared and tested as described in EXAMPLE 9 with the exception that an equivalent amount of the various diamine curatives listed in TABLE VI were used in place of the 6.86 g of diethyleneglycol bispropylamine.

TABLE VI

| Diamine curative $H_2N-C_3H_6O-W-C_3H_6-NH_2$ in which W is: | -55°C T-Peel N/25mm | 24°C T-Peel N/25mm | 24°C Lap Shear MPa | 82°C Lap Shear MPa |
|---|---|---|---|---|
| | Physical Characteristics Of Cured Adhesives | | | |
| 10. a covalent bond | 0 | 8.9 ± 6.2 | 28 ± 1.4 | 3.4 ± 1.0 |
| 11. $-(C_2H_4O)-$ | 45 ± 0 | 160 ± 6 | 33 ± 2.0 | 4.6 ± 0.3 |
| 12 $-(C_2H_4O)_2$ | 110 ± 44 | 210 ± 30 | 33 ± 2.8 | 3 ± 1 |
| 13. $-(C_2H_4O)_3$ | 160 ± 6 | 190 ± 3 | 31 ± 0.1 | 3 ± 0.3 |
| 14. Equal amounts of 3. and 5. | 58 ± 19 | 200 ± 35 | 32 ± 0.4 | 2 ± 0.3 |
| 15. $-(C_4H_8O)-$ | 71 ± 38 | 160 ± 19 | 32 ± 4.4 | 3.7 ± 2.0 |
| 16. $-(C_5H_{10}O)-$ | 27 ± 11 | 66 ± 60 | 30 ± 2.9 | 2.8 ± 0.9 |
| 17. $-(C_6H_{12}O)-$ | 20 ± 5.8 | 6.7 ± 4.5 | 28 ± 3.0 | 2.2 ± 0.9 |
| 18. 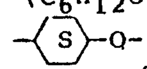 | 13 ± 0 | 29 ± 22 | 27 ± 1.1 | 3.0 ± 0.1 |
| 19. 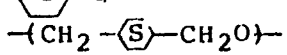 | 37 ± 18 | 200 ± 71 | 31 ± 1.9 | 5.6 ± 2.7 |
| 20. 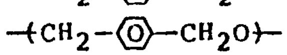 | 82 ± 22 | 130 ± 3 | 27 ± 3.6 | 3.6 ± 0 |
| 21. 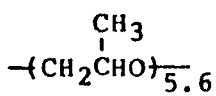 | 100 ± 6.2 | 140 ± 32 | 30 ± 0 | 1.7 ± 0.2 |
| 22. 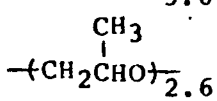 | 0 | 4.5 ± 0 | 21 ± 0.1 | 1.7 ± 0.1 |
| 23. $H_2N-C_2H_4O-C_2H_4O-C_2H_4-NH_2$* | 24 ± 2.7 | 55 ± 30 | 26 ± 1.0 | 6.4 ± 4.1 |
| 24. $H_2N-C_2H_4O(C_2H_4O)_2C_2H_4-NH_2$* | 31 ± 6.2 | 111 ± 19 | 35 ± 0 | 2.9 ± 0.2 |

* the diamine curative is shown, not "W"

The data of Table VI shows that diamines in which the linking group, W, is

$$-C_2H_4O-,\ -(C_2H_4O)_2-,\ -(C_2H_4O)_3-,\ -C_4H_8O-,$$

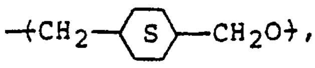, 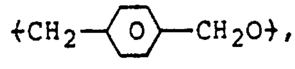, and $-(CH_2CH(CH_3)O)_{5.6}-$

all compounds within the generic definition of Formula I, provide adhesives having −55°C T-Peel, 24°C T-Peel, 24°C Lap Shear, and 82°C Lap Shear equal to or greater than 37 N/25 mm, 130 N/25 mm, 27 MPa, and 2 MPa respectively, all values equal to or above the requirements of the invention. The other amines either do not provide −55°C T-Peel of at least 40 N/25 mm or if they do it is with loss of 24°C T-Peel strength to a value of less than 170 N/25 mm or with loss of 24°C Lap Shear to a value below 32 MPa.

Examples 25—29

To compare the bond strength obtained by prior art toughened epoxy adhesives containing various toughening agents with the bond strength obtained by the adhesive composition of the invention, compositions were prepared as described in Example 1 using the same proportions of DGBP and IMDZ as used in Example 9 with the exception that the prior art toughening agents listed in Table VII (Examples 26—29) were used in place of the stabilized colloidal dispersion of Example 1 (Example 25). The results are given in Table VII.

TABLE VII

| Ex. No. | Reinforcing Material | −55°C T-Peel N/25 mm | 24°C T-Peel N/25 mm | 24°C Lap Shear MPa |
|---|---|---|---|---|
| 25 | SCD—1 | 110±40 | 210±39 | 33±2.7 |
| 26 | EPOTUF® 98—246[a] | 107± 0 | 115±11.6 | 25±3.4 |
| 27 | Hycar® CT—RLP 1300X8[b] | 108± 9.3 | 145±18 | 27±2.9 |
| 28 | Hycar CT—RLP 1300X15[c] | 62± 3.5 | 95±17 | 33±2.4 |
| 29 | Hycar CT—RLP 1300X13[d] | 130±13 | 87± 7.6 | 30±0.5 |

[a] an elastomeric copolymer modified epoxy resin available from Reichhold Chemicals Inc.

[b] a carboxy-terminated poly(82% butadiene-co-18% acrylonitrile) available from B. F. Goodrich Chemical Corp.; for further description of these CTBN modified epoxy resins see N. C. Paul et al., *Polymer 18*(9) 945—950 (1977).

[c] a carboxy-terminated poly(90% butadiene-co-10% acrylonitrile) available from B. F. Goodrich Chemical Corp.

[d] a carboxy-terminated poly(74% butadiene-co-26% acrylonitrile) available from B. F. Goodrich Chemical Corp.

The data of Table VII show that the adhesives which have been prepared by curing the epoxide group-containing compound (e.g., DGEBA, the diglycidyl ether of bisphenol) to which a preformed elastomeric polymer had been added (e.g., an elastomeric copolymeric modified epoxy resin from Reichhold or one of three different carboxy-terminated butadiene-acrylontrile copolymeric elastomers from Goodrich that have been prereacted with EPON® 828 as described by N. C. Paul, et al., supra, at 150°C) even when cured with a most preferred poly(oxyhydrocarbolene)diamine (e.g., DGBP, diethyleneglycol bispropylamine), yield cured epoxy resins providing adhesive bonds that when adequate peel performance is obtained a significant drop in shear strength is noted or when adequate shear strength is obtained a significant drop in peel performance is noted. The compositions of the invention demonstrates superior performance to the prior art in peel strength while maintaining high shear strength.

Examples 30 to 33

To compare the bond strength obtained by epoxide adhesives containing "flexibilized" or "toughening" curing agents, e.g., elastomeric compounds containing reactive —NH groups with the bond strength obtained by the adhesive composition of the invention, the procedure of Example 9 was repeated except that 6.0 g of amine terminated butadiene-acrylonitrile liquid polymers were used in place of 6.0 g of colloidally dispersed elastomer, i.e., the solid-stabilized, colloidal-dispersed, *in situ*-polymerized acrylic elastomeric particles. Table VIII gives the results of evaluations on the adhesive bonds.

TABLE VIII

| Ex No. | Elastomeric Curing Agent | −55°C T-Peel N/25 mm | 24°C T-Peel N/25 mm | 24°C Lap Shear MPa | 82°C Lap Shear MPa |
|---|---|---|---|---|---|
| 30 | Hycar® ATBN 1300X 16[e] | 32.5±16.9 | 91.2±31.6 | 32 ±2.0 | 1.1±0.5 |
| 31 | Hycar® ATBN 1300X 10[f] | 11.7± 2.7 | 0 | 21.2±8.6 | 1.7±0.2 |
| 32 | Ancamide® 1636[g] | 0 | 0 | 2.6±1.7 | 2.7±0.7 |
| 33 | Genamide® 2000[h] | 18 ± 6.2 | 100 ±19 | 28 ±0.2 | 3.9±0.8 |

[e] an amine-terminated poly(84% butadiene-co-16% acrylonitrile) having a total amine equivalent weight of 900 available from B. F. Goodrich Chemical Corp.

[f] a amine-terminated poly(90% butadiene-co-10% acrylonitrile) having a total amine equivalent weight of 1200 available from B. F. Goodrich Chemical Corp.

[g] an aliphatic polyamide having an —NH equivalent weight of 38 manufactured by Pacific Anchor Company.

[h] an polyamide having an —NH equivalent weight of 93.5 manufactured by Henkel Corporation.

The data of Table VIII show that although the use of an elastomer curing agent having an amine equivalent weight of 900 gave adhesive bonds having a −55°C T-Peel of 32 N/25 mm, its 82°C Lap Shear dropped to 1.2 MPa and when the elastomeric curing agent had an amine equivalent weight of 1200, the −55°C T-Peel was only 11 N/25 mm and 0 at 24°C and shear performance was poor.

Examples 34—36

To illustrate the use of additional *in situ* produced colloidally dispersed particles in the adhesive compositions of the invention, three adhesive compositions were prepared according to the procedure of Example 9 using in place of 20 parts of hexyl acrylate: in Example 34, 18 parts of hexyl acrylate and 2 parts of methyl methacrylate (the dispersion was designated SCD—2); in Example 35, 18 parts of hexyl acrylate and 2 parts of isoocylacrylate (the dispersion obtained was designated SCD—3); and in Example 36, 16 parts of hexyl acrylate and 4 parts of isooctyl acrylate (the dispersion obtained was designated SCD—4). The results obtained in evaluating the adhesive bonds using these compositions are given in Table IX below.

TABLE IX

| Ex No. | Epoxy resin containing colloidal elastomer | −55°C T-Peel N/25 mm | 24°C T-Peel N/25 mm | 24°C Lap shear MPa | 82°C Lap shear MPa |
|---|---|---|---|---|---|
| 34 | SCD—2 | 160±15 | 245±12 | 37±1.0 | 3.0±0.5 |
| 35 | SCD—3 | 180±26 | 280±23 | 34±2.0 | 2.4±0.7 |
| 36 | SCD—4 | 120±48 | 255±60 | 35±2.2 | 3.2±0.5 |

The data of Table IX show that the adhesive compositions of Examples 34—36, by virtue of their properties and composition, fall within the scope of the present invention and far exceeded the performance of the prior art materials described in Examples 27 to 31.

Examples 37—39

Adhesive compositions were prepared using 30 g of the stabilized colloidal dispersion SCD—3, obtained in accordance with the procedure of Example 34—36 from 78 parts of diglycidyl ether of bisphenol A, 18 pars of hexyl acrylate, 2 parts of isooctyl acrylate, and 2 parts of the Stabilizer A of Example 1 and the various amounts of diethyleneglycol bispropylamine and imidazole shown in Table X below. The results obtained in evaluating adhesive bonds using these compositions are given in Table X.

TABLE X

| Component | Ex. No. 37 | 38[j] | 39 |
|---|---|---|---|
| DGBP, g | 5.49 | 6.86 | 7.55 |
| IMDZ, g | 0.69 | 0.87 | 0.95 |
| ratio[i] amine/epoxide | 0.8 | 1.0 | 1.1 |
| −55°C T-Peel, N/25 mm | 45±12 | 180±26 | 100±25 |
| 24°C T-Peel, N/25 mm | 200± 9.4 | 280±23 | 270±12 |
| 24°C Lap Shear, MPa | 33± 0.1 | 34± 2.0 | 32± 0.4 |
| 82°C Lap Shear, MPa | 3.8± 0.1 | 2.4± 0.7 | 2.3± 0.4 |

[i] ratio of the equivalents of amine hydrogen to epoxide groups in the adhesive composition
[j] the composition Example 38 was the same as Example 35

Examples 37—39 show that the use of more or less curative than the amount that provides one amine hydrogen for one equivalent of epoxide caused a drop in the −55°C T-Peel as well as a drop in both the 24°C T-Peel and 24°C Lap Shear characteristics of the adhesive. However, these values remained within the definition of the invention.

Examples 40 and 41

An adhesive composition containing filler and "cocurative" was prepared by mixing 190 parts of SCD—1, as prepared in Example 1, with 10 parts of Epon® 828, 3.9 parts of Degussa aluminum oxide C and 2.1 parts of fumed silica (TC 200 manufactured by Degussa Company). Thirty grams of this filled composition were mixed with the materials given in Table XI. Adhesive bond evaluation specimens were then prepared as described above and allowed to cure at room temperature for seven days. The bond evaluation data are given in Table XI.

TABLE XI

| Components | Ex. No. 40 | 41 |
|---|---|---|
| adhesive composition, g | 30 | 30 |
| diethyleneglycol bispropylamine, g | 5.76 | 5.62 |
| 1,3-propanediamine, g | 0.34 | — |
| m-xylenediamine, g | — | 0.70 |
| imidazole, g | 0.68 | 0.70 |
| fumed silica[k], g | 0.13 | 0.28 |
| Results of Evaluation | | |
| −55°C T-Peel, N/25 mm | 113± 3.1 | 85±13 |
| 24°C T-Peel, N/25 mm | 210±38 | 240± 6.2 |
| 24°C Lap Shear, MPa | 37± 0.2 | 37± 0.7 |
| 82°C Lap Shear, MPa | 3.3± 0.8 | 2.8± 0.3 |

[k] Cab-O-Sil® EH—5 (Cabot Corp.)

The data of Table XI show that the cocuratives used (within the scope of the invention) provided cured epoxide resins with adhesive bond strengths within the present invention. In addition, the Examples show that certain types of fillers and modifiers could be added to the adhesive and properties within the scope of the present invention were still maintained.

Example 41

To illustrate the use of a "prereacted" curing agent, 144.2 parts of diethyleneglycol bispropylamine and 37.6 parts of the diglycidyl ether of bisphenol A were placed in a reaction vessel, stirred, and heated to 100°C. The mixture was allowed to react at this temperature for 3 hours, after which time 18.19 parts of imidazole curative accelerator was added and allowed to dissolve.

Ten parts of the prereacted curing agent were added to 30 parts of a stabilized colloidal dispersion, prepared as described in Example 1 to contain 6.75 parts of *in situ* polymerized elastomeric copolymer of 80 percent hexyl acrylate to 20 percent isooctyl acrylate, 0.675 parts of the dispersion stabilizer of Example 1, and 22.575 parts of the diglycidyl ether of bisphenol A. Adhesive bonds were prepared and tested as described above. The −55°C T-Peel was 200±82 N/25 mm, the 24°C T-Peel was 270±12 N/25 mm, the 24°C Lap Shear was 30.5±0.2 MPa, and the 82°C Lap Shear was 3.3±0.4.

When the procedure of this Example was repeated using 10 parts of the prereacted curing agent in 30 parts of a stabilized colloidal dispersion that contained 6.75 parts of *in situ* polymerized elastomer polymer of hexyl acrylate, 0.54 parts of the same dispersion stabilizer as above, and 22.71 parts of DG EBPA, the adhesive bonds exhibited a −55°C T-Peel of 235±17 N/25 mm, a 24°C T-Peel of 290±3.1 N/25 mm, a 24°C Lap Shear of 32.6±0.1, and a 82°C Lap Shear of 4.0±0.4.

Examples 42—44

To illustrate the use of various amounts of colloidal elastomeric particles in the composition of the invention, mixtures of components shown in Table XII were prepared to contain 12.2, 19.5, and 21.8 percent by weight of colloidal elastomeric particles, respectively. The composition of Example 42 was prepared by diluting the dispersion SCD—4 of Example 36 with EPON® 828 to provide a composition of 12.2 percent elastomer. The compositions of Example 28 and 29 were prepared as described in Example 36, using, however, sufficiently less EPON® 828 to obtain compositions having 19.5 and 21.8 percent colloidal elastomer respectively. To 30 g of each composition was added the amounts of curative diethyleneglycol bispropylamine, DGBP, and curative accelerator, IMDZ (imidazole) shown. With each composition adhesive bonds were prepared and evaluated as described above, and the results are given in Table XII below.

TABLE XII

| Components (% by weight) | Ex. No. 42 | 43 | 44 |
|---|---|---|---|
| EPON® 828 | 59.9 | 58.6 | 56.5 |
| Colloidal elastomer | 12.2 | 19.5 | 21.8 |
| Stabilizer | 1.2 | 1.9 | 2.2 |
| DGBP, curative | 23.7 | 17.7 | 17.2 |
| IMDZ, accelerator | 3.0 | 2.2 | 2.2 |
| Evaluation | | | |
| −55°C T-Peel, N/25 mm | 84.5±18.7 | 110 ±18.2 | 160 ±100 |
| 24°C T-Peel, N/25 mm | 230 ±25 | 230 ± 9.3 | 165 ±110 |
| 24°C Lap Shear, MPa | 34 ± 0.3 | 32 ± 1.4 | 32 ± 1.3 |
| 82°C Lap Shear, MPa | 2.4± 0.2 | 3.2± 0.3 | 2.3± 0.1 |

The data of Table XII show that variation of the amount of elastomer from about 12 to more than 20 percent of the total composition gave adhesives whose performance in a metal-to-metal bond was within the scope of the invention.

Various modifications and alternatives of this invention will become apparent to those skilled in the art without departing from the scope and spirit of this invention.

**Claims for the Contracting States: DE FR GB NL**

1. A process for preparing an epoxide compound-containing composition that is storage stable against phase separation, said process comprising the steps:

a. providing 1.0 part of a curable epoxide group-containing compound;

b. dissolving or dispersing in said epoxide compound in either order from 0.05 to 1 part per part of epoxide compound of a composition comprising

1) 75 to 98 percent by weight of polymerizable monomer composition that is polymerizable to an elastomeric polymer particle insoluble in said epoxide compound, said polymerizable monomer being selected from ethylenically-unsaturated monomers and polyurethane precursors, and

2) 25 to 2 percent by weight of a stabilizer having the formula PQ, in which Q is a polymeric segment that has a molecular weight of at least 1000 and is soluble in said epoxide group-containing compound, and P is selected from

(a) a functional group covalently attached to Q and also attached to the elastomeric particle during particle formation either by formation of a covalent or ionic bond with the elastomeric particle, and

(b) a polymeric segment that has a molecular weight of at least 1000 and that becomes absorbed into the elastomeric particle because it is soluble in said elastomeric polymer of said monomer composition but insoluble in said epoxide group-containing compound; and

c. subjecting the solution of said monomer composition in said epoxide group-containing compound to conditions which polymerize said monomer composition and stabilizer without either polymerizing or reacting with said epoxy group-containing compound, the temperature of monomer polymerization being in the range of 50 to 80°C for ethylenically-unsaturated monomer or in the range of 75—125°C for monomers derived from polyurethane precursors.

2. The process according to Claim 1 further comprising the step of subjecting said polymerized composition to a chemically effective amount of at least one of a curing agent or catalyst, and optionally a curing accelerator, to provide a cured composition.

3. A composition of matter, that is disposed in a one- or two-part package, that is storage stable against separation of phases, said composition comprising:

a. 1.0 part of a curable epoxide group-containing compound, and

b. 0.05 to 1.0 part of colloidally-dispersed, elastomeric particles that are insoluble in said epoxide compound, said elastomeric particles being derived from ethylenically-unsaturated monomer and polyurethane precursors, comprising:

1) 75 to 98 percent by weight of an elastomeric polymerized in said curable epoxide group-containing compound to a polymer which is insoluble in said epoxide compound, the temperature of said monomer polymerization being in the range of 50 to 80°C for ethylenically-unsaturated monomers or in the range of 75 to 125°C for monomers derived from polyurethane precursors, and

2) 25 to 2 percent by weight of a stabilizer having the formula PQ, in which Q is a polymeric segment that has a molecular weight of at least 1000 and is soluble in said epoxide group-containing compound, and P is slected from

(a) a functional group covalently attached to Q and also attached to the elastomeric particle during particle formation of a covalent or ionic bond with the elastomeric particle, and
and

(b) a polymeric segment that has a molecular weight of at least 1000 and that becomes absorbed into the elastomeric particle because it is soluble in said elastomeric polymer of said monomer composition but insoluble in said epoxide group-containing compound; and

(c) optionally, a chemically effective amount of at least one epoxide curing agent, catalyst, and curing accelerator.

4. The composition according to Claim 3 wherein said curing agent is a poly(oxyhydrocarbolene)-diamine compound.

5. The composition according to Claims 3 or 4 wherein said elastomeric particle comprises a polymer having a glass transition temperature of 25°C or less and is selected from polymers derived from at least one of ethylenically-unsaturated group-containing monomer, diisocyanates, and active hydrogen compounds.

6. The composition according to Claims 3 to 5 wherein said ethylenically-unsaturated monomer has the formula

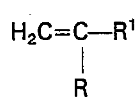

in which

R is hydrogen, methyl, or chlorine,

$R^1$ is halogen (fluorine, chlorine, bromine),

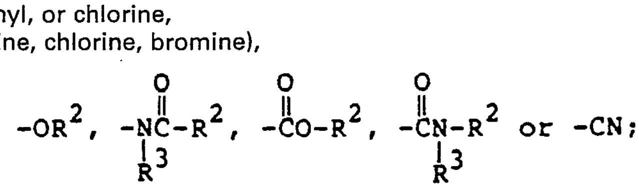

wherein:

$R^2$ and $R^3$ are independently hydrogen, a straight- or branched-chain alkyl group having 1 to 18 carbon atoms, a 5- or 6-atom carbocyclic group having 5 to 18 carbon atoms, a straight- or branched-chain alkoxyalkyl group having 2 to 18 carbon atoms, or $R^3$ together with $R^2$ and the —N— or

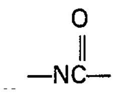

to which they are attached forms a 5- or 6-atom ring that can be further substituted by 1 to 4 lower alkyl groups ($C_1$ to $C_4$) or 1 benzo group.

7. The composition according to Claims 3 to 6 wherein said elastomeric particle is selected from

(a) particles derived from essentially stoichiometric amounts of diisocyanates and diols, and

(b) esters of acrylic acid with alkanols having 4 to 18 carbon atoms.

8. The composition according to Claims 3 to 7 wherein said stabilizer is a compound comprising a segment that is soluble in said curable epoxide group-containing compound and has a functionality that is reactive with or soluble in said elastomeric particle.

9. The composition according to Claims 3 to 8 wherein said curing agent is at least one poly(oxyhydrocarbolene)diamine having the formula:

$$H_2N—RO(R^1O)_nRNH_2 \qquad I$$

wherein

R is a linear or branched chain alkylene group having 2 to 4 carbon atoms,

$R^1$ is an hydrocarbolene group having 2 to 8 carbon atoms selected from straight and branched chain alkylene groups having 2 to 4 carbon atoms, cycloalkylene groups having 4 to 8 carbon atoms, and arene groups having 6 to 8 carbon atoms, and

n is a number having a value of 1 to 10 such that the number average molecular weight of said curing agent is from 175 to 750; and

with the provisos (i) that when $R^1$ is a branched chain alkylene the value of n is at least 5, and (ii) that the ratio of said curable composition to said curing agent is such that there is present in the adhesive composition of 0.75 to 1.1 equivalents of —NH group per equivalent of epoxide group.

10. A cured composition according to Claims 3 to 9.

11. A cured composition prepared by the process according to Claim 2.

**Claims for the Contracting State: IT**

1. A process for preparing an epoxide compound-containing composition, that is storage stable against phase separation, said process comprising the steps:

a. providing 1.0 part of a curable epoxide group-containing compound;

b. dissolving or dispersing in said epoxide compound in either order from 0.05 to 1 part per part of epoxide compound of a composition comprising

1) 75 to 98 percent by weight of polymerizable monomer composition that is polymerizable to a polymer insoluble in said epoxide compound, and

2) 25 to 2 percent by weight of a stabilizer having the formula PQ, in which Q is a polymeric segment that has a molecular weight of at least 1000 and is soluble in said epoxide group-containing compound, and P is selected from

(a) a functional group covalently attached to Q and also attached to the elastomeric particle during particle growth by formation of a covalent or ionic bond with the elastomeric particle, and

(b) a polymeric segment that has a molecular weight of at least 1000 and that becomes absorbed into the elastomeric particle because it is soluble in said elastomeric polymer of said monomer composition but insoluble in said epoxide group-containing compound; and

c. subjecting the solution of said monomer composition in said epoxide group-containing compound to conditions which polymerize said monomer composition and stabilizer without either polymerizing or reacting with said epoxy group-containing compound.

2. The process according to Claim 1 further comprising the step of subjecting said polymerized composition to a chemically effective amount of at least one of a curing agent or catalyst, and optionally a curing accelerator, to provide a cured composition.

3. A composition of matter, that is disposed in a one- or two-part package, that is storage stable against separation of phases, said composition comprising:

a. 1.0 part of a curable epoxide group-containing compound, and

b. 0.05 to 1.0 part of colloidally-dispersed, elastomeric particles that are insoluble in said epoxide compound, comprising:

1) 75 to 98 percent by weight of an elastomeric polymer of one or monomers in situ polymerized in said curable epoxide group-containing compound to a polymer which is insoluble in said epoxide compound and

2) 25 to 2 percent by weight of a stabilizer having the formula PQ, in which Q is a polymeric segment that has a molecular weight of at least 1000 and is soluble in said epoxide group-containing compound, and P is selected from

(a) a functional group covalently attached to Q and also attached to the elastomeric particle during particle growth by formation of a covalent or ionic bond with the elastomeric particle, and

(b) a polymeric segment that has a molecular weight of at least 1000 and that becomes absorbed into the elastomeric particle because it is soluble in said elastomeric polymer of said monomer composition but insoluble in said epoxide group-containing compound; and

(c) optionally, a chemically effective amount of at least one epoxide curing agent, catalyst, and curing accelerator.

4. The composition according to Claim 3 wherein said curing agent is a poly(oxyhydrocarbolene)-diamine compound.

5. The composition according to Claims 3 or 4 wherein said elastomeric particle comprises a polymer having a glass transition temperature of 25°C or less and is selected from polymers derived from at least one of ethylenically-unsaturated group-containing monomer, diisocyanates, and active hydrogen compounds.

6. The composition according to Claims 3 to 5 wherein said ethylenically-unsaturated monomer has the formula

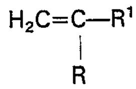

in which

R is hydrogen, methyl, or chlorine,

$R^1$ is halogen (fluorine, chlorine, bromine),

$-OR^2$, 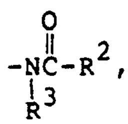, 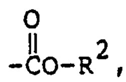, 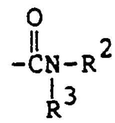 or $-CN$;

wherein:

$R^2$ and $R^3$ are independently hydrogen, a straight- or branched-chain alkyl group having 1 to 18 carbon atoms, a 5- or 6-atom carbocyclic group having 5 to 18 carbon atoms, a straight- or branched-chain alkoxyalkyl group having 2 to 18 carbon atoms, or $R^3$ together with $R^2$ and the —N— or

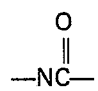

to which they are attached forms a 5- or 6-atom ring that can be further substituted by 1 to 4 lower alkyl groups ($C_1$ to $C_4$) or 1 benzo group.

7. The composition according to Claims 3 to 6 wherein said elastomeric particle is selected from

(a) particles derived from essentially stoichiometric amounts of diisocyanates and diols, and

(b) esters of acrylic acid with alkanols having 4 to 18 carbon atoms and an average of 4 to 8 carbon atoms.

8. The composition according to Claims 3 to 7 wherein said stabilizer is a compound comprising a segment that is soluble in said curable epoxide group-containing compound and has a functionality that is reactive with or soluble in said elastomeric particle.

9. The composition according to Claims 3 to 8 wherein said curing agent is at least one poly(oxyhydrocarbolene)diamine having the formula:

$$H_2N—RO(R^1O)_nRNH_2 \qquad I$$

wherein

R is a linear or branched chain alkylene group having 2 to 4 carbon atoms,

$R^1$ is an hydrocarbolene group having 2 to 8 carbon atoms selected from straight and branched chain alkylene groups having 2 to 4 carbon atoms, cycloalkylene groups having 4 to 8 carbons, and arene groups having 6 to 8 carbon atoms, and

n is a number having a value of 1 to 10 such that the number average molecular weight of said curing agent is from 175 to 750; and

with the provisos (i) that when $R^1$ is a branched chain alkylene the value of n is at least 5, and (ii) that the ratio of said curable composition to said curing agent is such that there is present in the adhesive composition of 0.75 to 1.1 equivalents of —NH group per equivalent of epoxide group.

10. A cured composition according to Claims 3 to 9.

11. A cured composition prepared by the process according to Claim 2.

**Patentansprüche für die Vertragsstaaten: DE FR GB NL**

1. Verfahren zum Erzeugen einer epoxidgruppenhaltigen Zusammensetzung, die gegen eine Phasentrennung lagerbeständig ist, mit folgenden Schritten:

a. es wird 1,0 Teil einer härtbaren epoxidgruppenhaltigen Verbindung beschafft;

b. in dieser Epoxidverbindung wird in beliebiger Reihenfolge in einer Menge von 0,05 bis 1 Teil pro Teil der Epoxidverbindung eine Zusammensetzung gelöst oder dispergiert, die enthält

1) 75 bis 98 Gew.% einer polymerisierbaren Monomerzusammensetzung, die zu einem elastomeren Polymerteilchen polymerisierbar ist, das in der Epoxidverbindung unlöslich ist, wobei das polymerisierbare Monomer aus den ethylenisch ungesättigten Monomeren und den Polyurethanvorstufen ausgewählt ist, und

2) 25 bis 2 Gew.% eines Stabilisators der Formel PQ, in der Q ein Polymersegment ist, das ein Molekulargewicht von mindestens 1000 hat und in der epoxidgruppenhaltigen Verbindung löslich ist, und P ausgewählt ist aus

(a) einer an Q kovalent angelagerten funktionellen Gruppe, die während der Bildung des elastomeren Teilchens entweder durch Bildung einer kovalenten oder ionischen Verbindung mit dem Teilchen an dieser angelagert wird, und

(b) einem Polymersegment, das ein Molekulargewicht von mindestens 1000 hat und das von dem elastomeren Teilchen absorbiert wird, weil es in dem elastomeren Polymer der Monomerzusammensetzung löslich, in der epoxidgruppenhaltigen Verbindung dagegen unlöslich ist; und

c. die Lösung der Monomerzusammensetzung in der epoxidgruppenhaltigen Verbindung wird Bedingungen unterworfen, unter denen die Monomerzusammensetzung und der Stabilisator polymerisiert werden, ohne daß sie eine Polymerisation der epoxidgruppenhaltigen Verbindung bewirken oder mit ihr reagieren, wobei die Polymerisationstemperatur des Monomers bei einem ethylenisch ungesättigten Monomer im Bereich von 50 bis 80°C und bei von Polyurethanvorstufen abgeleiteten Monomeren im Bereich von 75 bis 125°C liegt.

2. Verfahren nach Anspruch 1, dadurch gekennzeichnet, daß zum Erzeugen einer gehärteten Zusammensetzung die polymerisierte Zusammensetzung der Einwirkung einer chemisch wirksamen Menge eines Härters oder eines Katalysators und gegebenenfalls eines Härtebeschleunigers unterworfen wird.

3. Stoffzusammensetzung, die in einer einteiligen oder zweiteiligen Verpackung angeordnet und gegen Phasentrennung lagerbeständig ist, wobei die Zusammensetzung enthält:

a. 1,0 Teil einer härtbaren epoxidgruppenhaltigen Verbindung und

b. 0,05 bis 1,0 Teil kolloid dispergierten, elastomeren Teilchen, die in der Epoxidverbindung unlöslich sind und die von einem ethylenisch ungesättigten Monomer und Polyurethanvorstufen abgeleitet sind, umfassend:

1) 75 bis 98 Gew.% eines elastomeren Polymers eines oder mehrerer Monomerer, die in der härtbaren epoxidgruppenhaltigen Verbindung in situ zu einem in der Epoxidverbindung unlöslichen Polymer polymerisiert worden sind, wobei die Polymerisationstemperatur des Monomers bei einem ethylenisch ungesättigten Monomer im Bereich von 50 bis 80°C und bei von Polyurethanvorstufen abgeleiteten Monomeren im Bereich von 75 bis 125°C liegt.

2) 25 bis 2 Gew.% eines Stabilisators der Formel PQ, in der Q ein Polymersegment ist, das ein Molekulargewicht von mindestens 1000 hat und in der epoxidgruppenhaltigen Verbindung löslich ist, und P ausgewählt ist aus

(a) einer an Q kovalent angelagerten funktionellen Gruppe, die während der Bildung von elastomeren Teilchen entweder durch Bildung einer kovalenten oder ionischen Verbindung mit dem Teilchen an dieser angelagert wird,

(b) einem Polymersegment, das ein Molekulargewicht von mindestens 1000 hat und das von dem elastomeren Teilchen absorbiert wird, weil es in dem elastomeren Polymer der Monomerzusammensetzung löslich, in der epoxidgruppenhaltigen Verbindung dagegen unlöslich ist; und

c. gegebenenfalls einer chemisch wirksamen Menge mindestens eines Epoxidhärters, Katalysators und Härtebeschleunigers.

4. Zusammensetzung nach Anspruch 3, dadurch gekennzeichnet, daß der Härter eine Poly(oxyhydrocarbolen)diaminverbindung ist.

5. Zusammensetzung nach Anspruch 3 oder 4, dadurch gekennzeichnet, daß das elastomere Teilchen ein Polymer mit einer Einfriertemperatur von 25°C oder weniger ist und daß es aus den Polymeren ausgewählt ist, die aus mindestens einem der ethylenisch ungesättigte Gruppen enthaltenden Monomeren, Diisocyanaten und Aktivwasserstoffverbindungen ausgewählt sind.

6. Zusammensetzung nach einem der Anspruch 3 bis 5, dadurch gekennzeichnet, daß das ethylenisch ungesättigte Monomer die Formel

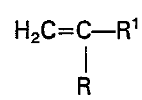

hat, in der

R Wasserstoff, Methyl oder Chlor,

$R^1$ Halogen (Fluor, Chlor, Brom)

$-OR^2$, 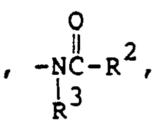, 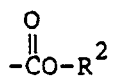, 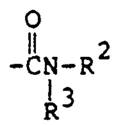 oder $-CN$;

oder —CN ist, wobei

$R^2$ und $R^3$ unabhängig voneinander jeweils Wasserstoff, eine gerad- oder verzweigtkettige Alkylgruppe mit 1 bis 19 Kohlenstoffatomen, eine Carboxylgruppe mit einem 5- oder 6-atomigen Ring und 5 bis 18 Kohlenstoffatomen oder eine gerad- oder verzweigtkettige Alkoxyalkylgruppe mit 2 bis 18 Kohlenstoffatomen sind oder $R^3$ zusammen mit $R^2$ und dem —N— und dem

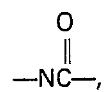,

an dem sie angelagert sind, einen 5- bis 6-atomigen Ring bildet, der mit 1 bis 4 niederen Alkylgruppen ($C_1$ bis $C_4$) oder 1 Benzogruppe substituiert sein kann.

7. Zusammensetzung nach einem der Ansprüche 3 bis 6, dadurch gekennzeichnet, daß das elastomere Teilchen ausgewählt ist aus

(a) Teilchen, die von im wesentlichen stöchiometrischen Mengen von Diisocyanaten und Diolen abgeleitet sind, und

(b) Estern der Acrylsäure mit Alkanolen mit 4 bis 18 Kohlenstoffatomen.

8. Zusammensetzung nach Anspruch 3 bis 7, dadurch gekennzeichnet, daß der Stabilisator eine Verbindung ist, die ein in der härtbaren epoxidgruppenhaltigen Verbindung lösliches Segment besitzt, des eine Fukntionalität besitzt, die mit dem elastomeren Teilchen reaktionsfähig oder darin löslich ist.

9. Zusammensetzung nach Anspruch 3 bis 8, durch gekennzeichnet, daß der Härter mindestens ein Poly(oxyhydrocarbolen)-diamin der Formel

$$H_2N—RO(R^1O)_nRNH_2 \qquad I$$

ist, in der

R eine lineare oder verzweigkettige Alkylengruppe mit 2 bis 4 Kohlenstoffatomen,

$R^1$ eine Hydrocarbolengruppe mit 2 bis 8 Kohlenstoffatomen ist, die ausgewählt ist aus den geradkettigen und verzweigtkettigen Alkylengruppen mit 2 bis 4 Kohlenstoffatomen, den Cycloalkylengruppen mit 4 bis 8 Kohlenstoffatomen, und den Arengruppen mit 6 bis 8 Kohlenstoffatomen und

n eine Zahl von 1 bis 10 und so gewählt ist, daß der Härter ein zahlenmäßig durchschnittliches Molekulargewicht von 175 bis 750 hat;

wobei (i) wenn $R^1$ ein verzweigtkettiges Alkylen ist, n mindestens den Wert 5 hat, und (ii) das Verhältnis der härtbaren Zusammensetzung zu dem Härter derart ist, daß die Klebstoffzusammensetzung 0,75 bis 1,1 Äquivalentmassen —NH-Gruppen pro Äquivalentmasse Epoxidgruppen enthält.

10. Gehärtete Zusammensetzung nach Anspruch 3 bis 9.

11. Gehärtete Zusammensetzung, die nach dem Verfahren nach Anspruch 2 erzeugt worden ist.

**Patentansprüche für den Vertragsstaat: IT**

1. Verfahren zum Erzeugen einer epoxidgruppenhaltigen Zusammensetzung, die gagen eine Phasentrennung lagerbeständig ist, mit folgenden Schritten:

a. es wird 1,0 Teil einer härtbaren epoxidgruppenhaltigen Verbindung beschafft;

b. in dieser Epoxidverbindung wird in beliebiger Reihenfolge in einer Menge von 0,05 bis 1 Teil pro Teil der Epoxidverbindung eine Zusammensetzung gelöst oder dispergiert, die enthält

1) 75 bis 98 Gew.% einer polymerisierbaren Monomerzusammensetzung, die zu einem elastomeren Polymerteilchen polymerisierbar ist, das in der Epoxidverbindung unlöslich ist,

2) 25 bis 2 Gew.% eines Stabilisators der Formel PQ, in der Q ein Polymersegment ist, das ein Molekulargewicht von mindestens 1000 hat und in der epoxidgruppenhaltigen Verbindung löslich ist, und P ausgewählt ist aus

(a) einer an Q kovalent angelagerten funktionellen Gruppe, die während der Bildung des elastomeren Teilchens entweder durch Bildung einer kovalenten oder ionischen Verbindung mit dem Teilchen an dieser angelagert wird, und

(b) einem Polymersegment, das ein Molekulargewicht von mindestens 1000 hat und das von dem elastomeren Teilchen absorbiert wird, weil es in dem elastomeren Polymer der Monomerzusammensetzung löslich, in der epoxidgruppenhaltigen Verbindung dagegen unlöslich ist; und

c. die Lösung der Monomerzusammensetzung in der epoxidgruppenhaltigen Verbindung wird

Bedingungen unterworfen, unter denen die monomerzusammensetzung und der Stabilisator polymerisiert werden, ohne daß sie eine Polymerisation der epoxidgruppenhaltigen Verbindung bewirken oder mit ihr reagieren.

2. Verfahren nach Anspruch 1, dadurch gekennzeichnet, daß zum Erzeugen einer gehärteten Zusammensetzung die polymerisierte Zusammensetzung der Einwirkung einer chemisch wirksamen Menge eines Härters oder eines Katalysators und gegebenenfalls eines Härtebeschleunigers unterworfen wird.

3. Stoffzusammensetzung, die in einer einteiligen oder zweiteiligen Verpackung angeordnet und gegen Phasentrennung lagerbeständig ist, wobei die Zusammensetzung enthält:

a. 1,0 Teil einer härtbaren epoxidgruppenhaltigen Verbindung und

b. 0,05 bis 1,0 Teil kolloid dispergierten, elastomeren Teilchen, die in der Epoxidverbindung unlöslich sind und die von einem ethylenisch ungesättigten Monomer und Polyurethanvorstufen abgeleitet sind, umfassend:

1) 75 bis 98 Gew.% eines elastomeren Polymers eines oder mehrerer Monomerer, die in der härtbaren epoxidgruppenhaltigen Verbindung in situ zu einem in der Epoxidverbindung unlöslichen Polymer polymerisiert worden sind, und

2) 25 bis 2 Gew.% eines Stabilisators der Formel PQ, in der Q ein Polymersegment ist, das ein Molekulargewicht von mindestens 1000 hat und in der epoxidgruppenhaltigen Verbindung löslich ist, und P ausgewählt ist aus

(a) einer an Q kovalent angelagerten funktionellen Gruppe, die während der Bildung des elastomeren Teilchens entweder durch Bildung einer kovalenten oder ionischen Verbindung mit einem Teilchen an dieser angelagert wird,

(b) einem Polymersegment, das ein Molekulargewicht von mindestens 1000 hat und das von dem elastomeren Teilchen absorbiert wird, weil es in dem elastomeren Polymer der Monomerzusammensetzung löslich, in der epoxidgruppenhaltigen Verbindung dagegen unlöslich ist; und

c. gegebenenfalls einer chemisch wirksamen Menge mindestens eines Epoxidhärters, Katalysators und Härtebeschleunigers.

4. Zusammensetzung nach Anspruch 3, dadurch gekennzeichnet, daß der Härter eine Poly(oxyhydrocarbolen)diaminverbindung ist.

5. Zusammensetzung nach Anspruch 3 oder 4, dadurch gekennzeichnet, daß das elastomere Teilchen ein Polymer mit einer Einfriertemperatur von 25°C oder weniger ist und daß es aus den Polymeren ausgewählt ist, die aus mindestens einem der ethylenisch ungesättigte Gruppen enthaltenden Monomeren, Diisocyanaten und Aktivwasserstoffverbindungen ausgewählt sind.

6. Zusammensetzung nach einem der Anspruch 3 bis 5, dadurch gekennzeichnet, daß das ethylenisch ungesättigte Monomer die Formel

$$\begin{array}{c} H_2C{=}C{-}R^1 \\ | \\ R \end{array}$$

hat, in der

R Wasserstoff, Methyl oder Chlor,

$R^1$ Halogen (Fluor, Chlor, Brom)

$$-OR^2,\ \ -N(R^3)-\overset{O}{\overset{\|}{C}}-R^2,\ \ -\overset{O}{\overset{\|}{C}}-O-R^2,\ \ -\overset{O}{\overset{\|}{C}}-N(R^3)-R^2\ \text{oder}\ \ -CN;$$

oder —CN ist, wobei

$R^2$ und $R^3$ unabhängig voneinander jeweils Wasserstoff, eine gerad- oder verzweigtkettige Alkylgruppe mit 1 bis 19 Kohlenstoffatomen, eine Carboxylgruppe mit einem 5- oder 6-atomigen Ring und 5 bis 18 Kohlenstoffatomen oder eine gerad- oder verzweigtkettige Alkoxyalkylgruppe mit 2 bis 18 Kohlenstoffatomen sind oder $R^3$ zusammen mit $R^2$ und dem —N— und dem

$$-N-\overset{O}{\overset{\|}{C}}-,$$

an dem sie angelagert sind, einen 5- bis 6-atomigen Ring bildet, der mit 1 bis 4 niederen Alkylgruppen ($C_1$ bis $C_4$) oder 1 Benzogruppe substituiert sein kann.

7. Zusammensetzung nach einem der Ansprüche 3 bis 6, dadurch gekennzeichnet, daß das elastomere Teilchen ausgewählt ist aus

(a) Teilchen, die von im wesentlichen stöchiometrischen Mengen von Diisocyanaten und Diolen abgeleitet sind, und

(b) Estern der Acrylsäure mit Alkanolen mit 4 bis 18 Kohlenstoffatomen und durchschnittlich 4 bis 18 Kohlernstoffatomen.

8. Zusammensetzung nach Anspruch 3 bis 7, dadurch gekennzeichnet, daß der Stabilisator eine

Verbindung ist, die ein in der härtbaren epoxidgruppenhaltigen Verbindung lösliches Segment besitzt, des eine Funktionalität besitzt, die mit dem elastomeren Teilchen reaktionsfähig oder darin löslich ist.

9. Zusammensetzung nach Anspruch 3 bis 8, durch gekennzeichnet, daß der Härter mindestens ein Poly(oxyhydrocarbolen)-diamin der Formel

$$H_2N—RO(R^1O)_nRNH_2 \qquad I$$

ist, in der

R eine lineare oder verzweigkettige Alkylengruppe mit 2 bis 4 Kohlenstoffatomen,

$R^1$ eine Hydrocarbolengruppe mit 2 bis 8 Kohlenstoffatomen ist, die ausgewählt ist aus den geradkettigen und verzweigtkettigen Alkylengruppen mit 2 bis 4 Kohlenstoffatomen, den Cycloalkylengruppen mit 4 bis 8 Kohlenstoffatomen, und den Arengruppen mit 6 bis 8 Kohlenstoffatomen und

n eine Zahl von 1 bis 10 und so gewählt ist, daß der Härter ein zahlenmäßig durchschnittliches Molekulargewicht von 175 bis 750 hat;

wobei (i) wenn $R^1$ ein verzweigtkettiges Alkylen ist, n mindestens den Wert 5 hat, und (ii) das Verhältnis der härtbaren Zusammensetzung zu dem Härter derart ist, daß die Klebstoffzusammensetzung 0,75 bis 1,1 Äquivalentmassen —NH-Gruppen pro Äquivalentmasse Epoxidgruppen enthält.

10. Gehärtete Zusammensetzung nach Anspruch 3 bis 9.

11. Gehärtete Zusammensetzung, die nach dem Vefahren nach Anspruch 2 erzeugt worden ist.

**Revendications pour les Etats contractants: DE FR GB NL**

1. Procédé de préparation d'une composition contenant un composé époxyde, qui est stable au stockage vis-à-vis d'une séparation des phases, ledit procédé comprenant les étapes consistant:

a. à prendre 1,0 partie d'un composé contenant un groupe époxyde durcissable;

b. à dissoudre ou à disperser dans ledit composé époxyde, dans un ordre quelconque, de 0,05 à 1 partie, par partie de composé époxyde, d'une composition comprenant

1) de 75 à 98% en poids d'une composition monomère polymérisable qui est polymérisable pour donner une particule polymère élastomère insoluble dans ledit composé époxyde, ledit monomère polymérisable étant choisi parmi les monomères éthyléniquement insaturés et les précurseurs de polyuréthanne, et

2) de 25 à 2% en poids d'un agent stabilisant répondant à la formule PQ, dans laquelle Q est un segment polymère ayant une masse moléculaire d'au moins 1000 et qui est soluble dans ledit composé époxydique, et P est choisi parmi

(a) un groupe fonctionnel lié par liaison covalente à Q, et aussi lié à la particule élastomère pendant la formation de cette dernière, par formation d'une liaison soit covalente soit ionique avec la particule élastomère, et

(b) un segment polymère ayant une masse moléculaire d'au moins 1000 et qui est absorbé par la particule élastomère du fait de sa solubilité dans ledit polymère élastomère de ladite composition monomère, mais qui est insoluble dans ledit composé époxydique, et

c. à soumettre la solution de ladite composition monomère dans ledit composé époxydique à des conditions qui polymérisent ladite composition monomère et ledit stabilisant, sans polymérisation ou réaction avec ledit composé époxydique, la température de la polymérisation du monomère étant comprise entre 50 et 80°C pour le monomère éthyléniquement insaturé, et entre 75 et 125°C pour les monomères dérivant des précurseurs de polyuréthanne.

2. Procédé selon la revendication 1, comprenant en outre l'étape consistant à soumettre ladite composition polymérisée à une quantité chimiquement efficace d'au moins un agent de durcissement ou un catalyseur, et facultativement un accélérateur de durcissement, pour donner une composition durcie.

3. Composition de matière, disposée dans un conditionnement en une ou deux parties, qui est stable au stockage vis-à-vis de la séparation des phases, ladite composition comprenant:

a. 1,0 partie d'un composé durcissable époxydique, et

b. de 0,05 à 1,0 partie de particules élastomères à dispersion colloïdale, qui sont insolubles dans ledit composé époxydique, lesdites particules élastomères dérivant d'un monomère éthyléniquement insaturé et de précurseurs de polyuréthanne, comprenant:

1) de 75 à 98% en poids d'un polymère élastomère d'un ou plusieurs monomères polymérisés in situ dans ledit composé époxydique durcissable pour donner un polymère qui est insoluble dans ledit composé époxyde, la température de ladite polymérisation du monomère étant comprise entre 50 et 80°C pour les monomères éthléniquement insaturée ou entre 75 et 125°C pour les monomères dérivant de précurseurs de polyuréthanne, et

2) de 25 à 2% en poids d'un agent stabilisant répondant à la formule PQ, dans laquelle Q est un segment polymère ayant une masse moléculaire d'au moins 1000 et qui est soluble dans ledit composé époxydique, et P est choisi parmi

(a) un groupe fonctionnel lié par liaison covalente à Q et aussi lié à la particule élastomère pendant la croissance de la particule, par formation d'une liaison covalente ou ionique avec la particule élastomère, et

(b) un segment polymère ayant une masse moléculaire d'au moins 1000 et qui est absorbé par la particule élastomère du fait de sa solublité dans ledit polymère élastomère de ladite composition

monomère, mais qui est insoluble dans ledit composé époxydique; et

(c) facultativement, une quantité chimiquement efficace d'au moins un agent de durcissement époxyde, d'un catalyseur et d'un accélérateur de durcissement.·

4. Composition selon la revendication 3, dans laquelle ledit agent de durcissement est un composé poly(oxyhydrocarbolène)diamine.

5. Composition selon les revendications 3 ou 4, dans laquelle ladite particule élastomère comprend un polymère ayant une température de transition vitreuse de 25°C ou moins, et est choisie parmi les polymères dérivant d'au moins un des composés suivante: monomère contenant des groupes éthyléniquement insaturés, diisocyanates et composés comportant de l'hydrogène actif.

6. Composition selon les revendications 3 à 5, dans laquelle ledit monomère éthyléniquement insaturé a la formule

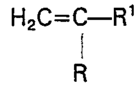

dans laquelle

R est un atome d'hydrogène ou le radical méthyle, ou le chlore,

$R^1$ est un atome d'halogène (fluor, chlore, brome),

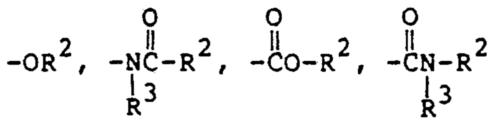

ou $-CN$;

où:

$R^2$ et $R^3$ indépendamment l'un de l'autre, sont chacun un atome d'hydrogène, un groupe alkyle à chaîne droite ou ramifiée ayant de 1 à 18 atomes de carbone, un groupe carbocyclique à 5 ou 6 sommets ayant de 5 à 18 atomes de carbone, un groupe alcoxyalkyle à chaîne droite ou ramifiée ayant de 2 à 18 atomes de carbone, ou bien $R^3$, avec $R^2$ et les radicaux —N— ou

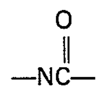

auxquels ils sont liés, peuvent former un noyau à 5 ou 6 sommets, susceptible d'être substitué par 1 à 4 groupes alkyle inférieur (en $C_1$ à $C_4$) ou par un groupe benzo.

7. Composition selon les revendications 3 à 6, dans laquelle ladite particule élastomère est choisie parmi

(a) les particules dérivant de quantités pratiquement stoechiométriques de diisocyanates et de diols, et

(b) les esters de l'acide acrylique et d'alcanols ayant de 4 à 18 atomes de carbone.

8. Composition selon les revendications 3 à 7, dans laquelle ledit agent stabilisant est un composé comprenant un segment qui est soluble dans ledit composé époxyde durcissable et qui présente une fonctionnalité qui est réactive vis-à-vis de ladite particule élastomère, ou est soluble dans cette dernière.

9. Composition selon les revendications 3 à 8, dans laquelle ledit agent de durcissement est au moins une poly(oxyhydrocarbolène)diamine répondant à la formule

$$H_2N—RO(R^1O)_nRNH_2 \qquad I$$

dans laquelle:

R est un radical alkylène à chaîne droite ou ramifiée ayant de 2 à 4 atomes de carbone,

$R^1$ est un groupe hydrocarbolène ayant de 2 à 8 atomes de carbone choisi parmi les groupes alkylène à chaîne droite ou ramifiée ayant de 2 à 4 atomes de carbone, les groupes cycloalkylènes ayant de 4 à 8 atomes de carbone, et les groupes arène ayant de 6 à 8 atomes de carbone, et

n est un nombre dont la valeur est comprise entre 1 et 10, tel que la masse moléculaire moyenne en nombre dudit agent de durcissement soit comprise entre 175 et 750; et

avec les conditions que (i) quand $R^1$ est un radical alkylène à chaîne ramifiée, n ait pour valeur au moins 5, et (ii) le rapport entre ladite composition durcissable et ledit agent de durcissement soit tel que l'on ait dans la composition adhésive de 0,75 à 1,1 équivalents de groupe —NH par équivalent de groupe époxyde.

10. Composition durcie selon les revendications 3 à 9.

11. Composition durcie préparée par la procédé selon la revendication 2.

**Revendication pour l'Etat contractant: IT**

1. Procédé de préparation d'une composition contenant un composé époxyde, qui est stable au stockage vis-à-vis d'une séparation des phases, ledit procédé comprenant les étapes consistant:

a. à prendre 1,0 partie d'un composé contenant un groupe époxyde durcissable;

b. à dissoudre ou à disperser dans ledit composé époxyde, dans un ordre quelconque, de 0,05 à 1 partie, par partie de composé époxyde, d'une composition comprenant

1) de 75 à 98% en poids d'une composition monomère polymérisable qui est polymérisable pour donner un polymère élastomère insoluble dans ledit composé époxyde, et

2) de 25 à 2% en poids d'un agent stabilisant répondant à la formule PQ, dans laquelle Q est un segment polymère ayant une masse moléculaire d'au moins 1000 et qui est soluble dans ledit composé époxydique, et P est choisi parmi

(a) un groupe fonctionnel lié par liaison covalente à Q, et aussi lié à la particule élastomère pendant la formation de cette dernière, par formation d'une liaison soit covalente soit ionique avec la particule élastomère, et

(b) un segment polymère ayant une masse moléculaire d'au moins 1000 et qui est absorbé par la particule élastomère du fait de sa solubilité dans ledit polymère élastomère de ladite composition monomère, mais qui est insoluble dans ledit composé époxydique, et

c. à soumettre la solution de ladite composition monomère dans ledit composé époxydique à des conditions qui polymérisent ladite composition monomère et ledit stabilisant, sans polymérisation ou réaction avec ledit composé époxydique.

2. Procédé selon la revendication 1, comprenant en outre l'étape consistant à soumettre ladite composition polymérisée à une quantité chimiquement efficace d'au moins un agent de durcissement ou un catalyseur, et facultativement un accélérateur de durcissement, pour donner une composition durcie.

3. Composition de matière, disposée dans un conditionnement en une ou deux parties, qui est stable au stockage vis-à-vis de la séparation des phases, ladite composition comprenant:

a. 1,0 partie d'un composé durcissable époxydique, et

b. de 0,05 à 1,0 partie de particules élastomères à dispersion colloïdale, qui sont insolubles dans ledit composé époxydique, comprenant:

1) de 75 à 98% en poids d'un polymère élastomère d'un ou plusieurs monomères polymérisés in situ dans ledit composé époxydique durcissable pour donner un polymère qui est insoluble dans ledit composé époxyde, et

2) de 25 à 2% en poids d'un agent stabilisant répondant à la formule PQ, dans laquelle Q est un segment polymère ayant une masse moléculaire d'au moins 1000 et qui est soluble dans ledit composé époxydique, et P est choisi parmi

(a) un groupe fonctionnel lié par liaison covalente à Q et aussi lié à la particule élastomère pendant la croissance de la particule, par formation d'une liaison covalente ou ionique avec la particule élastomère, et

(b) un segment polymère ayant une masse moléculaire d'au moins 1000 et qui est absorbé par la particule élastomère du fait de sa solublité dans ledit polymère élastomère de ladite composition monomère, mais qui est insoluble dans ledit composé époxydique; et

(c) facultativement, une quantité chimiquement efficace d'au moins un agent de durcissement époxyde, d'un catalyseur et d'un accélérateur de durcissement.

4. Composition selon la revendication 3, dans laquelle ledit agent de durcissement est un composé poly(oxyhydrocarbolène)diamine.

5. Composition selon les revendications 3 ou 4, dans laquelle ladite particule élastomère comprend un polymère ayant une température de transition vitreuse de 25°C ou moins, et est choisie parmi les polymères dérivant d'au moins un des composés suivante: monomère contenant des groupes éthyléniquement insaturés, diisocyanates et composés comportant de l'hydrogène actif.

6. Composition selon les revendications 3 à 5, dans laquelle ledit monomère éthyléniquement insaturé a la formule

```
H2C=C—R1
    |
    R
```

dans laquelle

R est un atome d'hydrogène ou le radical méthyle, ou le chlore,

$R^1$ est un atome d'halogène (fluor, chlore, brome),

```
         O          O         O
         ||         ||        ||
-OR2, -NC-R2,  -CO-R2,  -CN-R2    ou    -CN;
        |                  |
        R3                 R3
```

où:

$R^2$ et $R^3$ indépendamment l'un de l'autre, sont chacun un atome d'hydrogène, un groupe alkyle à chaîne droite ou ramifiée ayant de 1 à 18 atomes de carbone, un groupe carbocyclique à 5 ou 6 sommets ayant de 5 à 18 atomes de carbone, un groupe alcoxyalkyle à chaîne droite ou ramifiée ayant de 2 à 18 atomes de carbone, ou bien $R^3$, avec $R^2$ et les radicaux —N— ou

```
   O
   ||
—NC—
```

auxquels ils sont liés, peuvent former un noyau à 5 ou 6 sommets, susceptible d'être substitué par 1 à 4 groupes alkyle inférieur (en $C_1$ à $C_4$) ou par un groupe benzo.

7. Composition selon les revendications 3 à 6, dans laquelle ladite particule élastomère est choisie parmi

(a) les particules dérivant de quantités pratiquement stoechiométriques de diisocyanates et de diols, et

(b) les esters de l'acide acrylique et d'alcanols ayant de 4 à 18 atomes de carbone et en moyenne de 4 à 8 atomes de carbone.

8. Composition selon les revendications 3 à 7, dans laquelle ledit agent stabilisant est un composé comprenant un segment qui est soluble dans ledit composé époxyde durcissable et qui présente une fonctionnalité qui est réactive vis-à-vis de ladite particule élastomère, ou est soluble dans cette dernière.

9. Composition selon les revendications 3 à 8, dans laquelle ledit agent de durcissement est au moins une poly(oxyhydrocarbolène)diamine répondant à la formule

$$H_2N—RO(R^1O)_nRNH_2 \qquad I$$

dans laquelle:

R est un radical alkylène à chaîne droite ou ramifiée ayant de 2 à 4 atomes de carbone,

$R^1$ est un groupe hydrocarbolène ayant de 2 à 8 atomes de carbone choisi parmi les groupes alkylène à chaîne droite ou ramifiée ayant de 2 à 4 atomes de carbone, les groupes cycloalkylènes ayant de 4 à 8 atomes de carbone, et les groupes arène ayant de 6 à 8 atomes de carbone, et

n est un nombre dont la valeur est comprise entre 1 et 10, tel que la masse moléculaire moyenne en nombre dudit agent de durcissement soit comprise entre 175 et 750; et

avec les conditions que (i) quand $R^1$ est un radical alkylène à chaîne ramifiée, n ait pour valeur au moins 5, et (ii) le rapport entre ladite composition durcissable et ledit agent de durcissement soit tel que l'on ait dans la composition adhésive de 0,75 à 1,1 équivalents de groupe —NH par équivalent de groupe époxyde.

10. Composition durcie selon les revendications 3 à 9.

11. Composition durcie préparée par la procédé selon la revendication 2.